(19) Europäisches Patentamt
European Patent Office
Office européen des brevets

(11) Veröffentlichungsnummer: **0 453 396 B1**

(12) **EUROPÄISCHE PATENTSCHRIFT**

(45) Veröffentlichungstag der Patentschrift: **13.12.95**

(51) Int. Cl.$^6$: **C09D 7/12**

(21) Anmeldenummer: **91810192.4**

(22) Anmeldetag: **21.03.91**

# (54) Lackzusammensetzungen

(30) Priorität: **30.03.90 CH 1056/90**

(43) Veröffentlichungstag der Anmeldung:
**23.10.91 Patentblatt 91/43**

(45) Bekanntmachung des Hinweises auf die Patenterteilung:
**13.12.95 Patentblatt 95/50**

(84) Benannte Vertragsstaaten:
**BE DE ES FR GB IT NL**

(56) Entgegenhaltungen:
**EP-A- 0 180 548**
**EP-A- 0 200 190**
**DE-A- 3 320 615**
**FR-A- 2 607 494**
**FR-A- 2 619 814**
**US-A- 3 268 474**

(73) Patentinhaber: **CIBA-GEIGY AG**
**Klybeckstrasse 141**
**CH-4002 Basel (CH)**

(72) Erfinder: **Valet, Andreas, Dr.**
**Im Bruckacker 18**
**W-7859 Eimeldingen (DE)**

EP 0 453 396 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Lackzusammensetzungen, welche Mischungen verschiedener UV-Absorber enthalten.

Die Einflüsse von Luftsauerstoff, Feuchtigkeit und vor allem UV-Licht führen in Lacken zu einem Abbau des Polymermaterials. Dies äussert sich z.B. in Rissbildungen, Glanzverlust, Farbtonänderungen, Delaminierung und Blasenbildung. Bekanntlich kann man solche Vorgänge in Lacken durch Verwendung geeigneter Stabilisatoren verzögern.

Aus der EP-A-0 442 847, deren Veröffentlichungsdatum nach dem Prioritätsdatum der vorliegenden Anmeldung liegt, sind beispielsweise Lackzusammensetzungen bekannt, welche ein 2-Hydroxyphenyltriazin enthalten, wobei auch noch Antioxidantien, weitere UV-Absorber und Lichtschutzmittel zugesetzt werden können. Auch sind Lackzusammensetzungen, welche eine Mischung aus 2-Hydroxybenztriazol, einem Oxalanilid und einem Hydroxybenzophenon als UV-Absorber sowie eine Piperidin-Verbindung als Lichtschutzmittel enthalten aus den FR-A-2 619 814, FR-A-2 607 494 und DE-A-33 20 615 bekannt.

Es wurde nun gefunden, dass auch gewisse Kombinationen von UV-Absorbern unterschiedlicher chemischer Struktur in der Lage sind, die Bildung der genannten Schäden in Lacken weitgehend verhindern zu können.

Gegenstand der vorliegenden Erfindung sind somit Lackzusammensetzungen, die als UV-Absorber 0,01 bis 5 Gew.-% einer Mischung aus mindestens einem 2-Hydroxyphenylbenztriazol und mindestens einem 2-Hydroxyphenyltriazin oder 2-Hydroxybenzophenon enthalten, wobei 2-Hydroxyphenylbenztriazol zu 2-Hydroxyphenyltriazin bzw. 2-Hydroxyphenylbenztriazol zu 2-Hydroxybenzophenon im Molverhältnis von 3:1 bis 1:3 vorliegen und
wobei das 2-Hydroxyphenylbenztriazol der Formel

(1a) 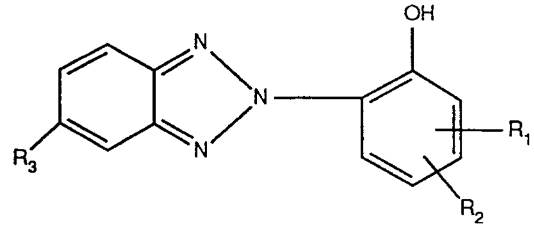 oder

(1b) 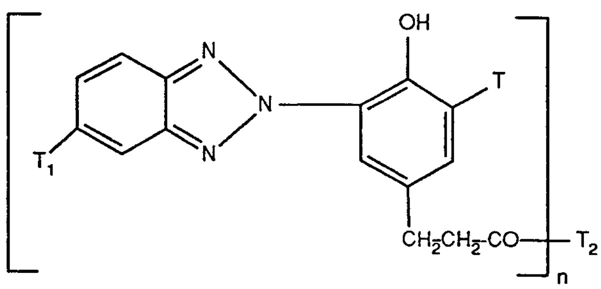 ,

das 2-Hydroxyphenyltriazin der Formel

(2) 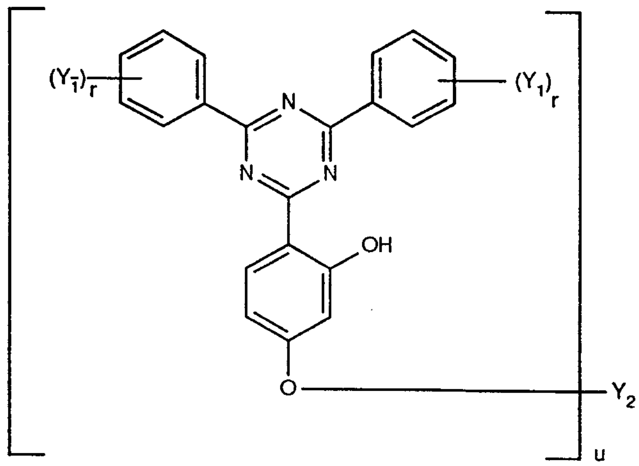

und
das 2-Hydroxybenzophenon der Formel

(3) 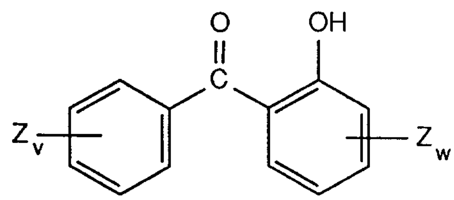

entspricht, worin
in den Verbindungen der Formel (1a)
$R_1$ Wasserstoff, Alkyl mit 1 bis 24 Kohlenstoffatomen oder Phenylalkyl mit 1 bis 4 Kohlenstoffatomen im Alkylteil,
$R_2$ Wasserstoff, Halogen, Alkyl mit 1 bis 18 Kohlenstoffatomen oder Phenylalkyl mit 1 bis 4 Kohlenstoffatomen im Alkylteil, und
$R_3$ Wasserstoff, Chlor oder Alkyl mit 1 bis 4 Kohlenstoffatomen, bedeutet, wobei mindestens einer der Reste $R_1$ und $R_2$ von Wasserstoff verschieden ist,
in den Verbindungen der Formel (1b)
T Wasserstoff oder Alkyl mit 1 bis 6 Kohlenstoffatomen,
$T_1$ Wasserstoff, Chlor oder Alkyl mit 1 bis 4 Kohlenstoffatomen, n 1 oder 2 und $T_2$, wenn n 1 ist, Chlor oder ein Rest der Formel $-OT_3$, und wenn n 2 ist, ein Rest der Formel $-O-T_9-O-$ ist, worin $T_3$ Wasserstoff, gegebenenfalls durch 1 bis 3 Hydroxylgruppen substituiertes Alkyl mit 1 bis 18 Kohlenstoffatomen, durch -O- ein- oder mehrfach unterbrochenes Alkyl mit 3 bis 18 Kohlenstoffatomen, das gegebenenfalls durch Hydroxyl substituiert ist,gegebenenfalls durch Hydroxyl substituiertes Alkenyl mit 2 bis 18 Kohlenstoffatomen, Phenylalkyl mit 1 bis 4 Kohlenstoffatomen im Alkylteil oder ein Rest der Formel $-CH_2CH(OH)-T_7$ ist, $T_7$ Wasserstoff, Alkyl mit 1 bis 18 Kohlenstoffatomen oder Phenyl, $T_9$ Alkylen mit 2 bis 8 Kohlenstoffatomen, Alkenylen mit 4 bis 8 Kohlenstoffatomen,Cyclohexylen oder durch -O- ein- oder mehrfach unterbrochenes Alkylen mit 2 bis 18 Kohlenstoffatomen,
in den Verbindungen der Formel (2)
u 1 oder 2 ist, und r eine ganze Zahl von 1 bis 3 bedeutet, die Substituenten $Y_1$ unabhängig voneinander Wasserstoff, Hydroxyl, Halogenmethyl, Alkyl mit 1 bis 12 Kohlenstoffatomen, Alkoxy mit 1 bis 18 Kohlenstoffatomen oder Halogen bedeuten, $Y_2$, wenn u 1 ist, Alkyl mit 1 bis 18 Kohlenstoffatomen, durch Hydroxyl, Alkoxy mit 1 bis 18 Kohlenstoffatomen, Halogen, durch -COOH, $-COOY_8$, $-CONH_2$, $-CONHY_9$, $-CONY_9Y_{10}$, -CN und/oder $-OCOY_{11}$ substituiertes Alkyl mit 1 bis 12 Kohlenstoffatomen, durch ein oder mehrere Sauerstofftatome unterbrochenes und gegebenenfalls durch Hydroxyl oder Alkoxy mit 1 bis 12 Kohlenstoffatomen substituiertes Alkyl mit 4 bis 20 Kohlenstoffatomen, Alkenyl mit 3 bis 6 Kohlenstoffatomen, Glycidyl,

unsubstituiertes oder durch Hydroxyl, Chlor und/oder Methyl substituiertes Phenylalkyl mit 1 bis 5 Kohlenstoffatomen im Alkylteil, $-COY_{12}$oder $-SO_2Y_{13}$ bedeutet, oder $Y_2$ wenn u 2 ist, Alkylen mit 2 bis 16 Kohlenstoffatomen, Alkenylen mit 4 bis 12 Kohlenstoffatomen, Xylylen, durch ein oder mehrere -O- unterbrochenes und/oder durch Hydroxyl substituiertes Alkylen mit 3 bis 20 Kohlenstoffatomen, $-CH_2CH(OH)CH_2-O-Y_{15}-OCH_2CH(OH)CH_2$, oder $-(CH_2)_m-CO_2-Y_{18}-OCO-(CH_2)_m-$ ist, worin m 1, 2 oder 3 ist, $Y_8$ Alkyl mit 1 bis 18 Kohlenstoffatomen, Alkenyl mit 3 bis 18 Kohlenstoffatomen, durch ein oder mehrere Sauerstoffatome unterbrochenes und/oder durch Hydroxyl substituiertes Alkyl mit 3 bis 20 Kohlenstoffatomen, Glycidyl oder Phenylalkyl mit 1 bis 5 Kohlenstoffatomen im Alkylteil bedeutet, $Y_9$ und $Y_{10}$ unabhängig voneinander Alkyl mit 1 bis 12 Kohlenstoffatomen, Alkoxyalkyl mit 3 bis 12 Kohlenstoffatomen, Dialkylaminoalkyl mit 4 bis 16 Kohlenstoffatomen oder Cycloalkyl mit 5 bis 12 Kohlenstoffatomen bedeuten, $Y_{11}$ Alkyl mit 1 bis 18 Kohlenstoffatomen, Alkenyl mit 2 bis 18 Kohlenstoffatomen oder Phenyl, $Y_{12}$ Alkyl mit 1 bis 18 Kohlenstoffatomen, Alkenyl mit 2 bis 18 Kohlenstoffatomen, Phenyl, Alkoxy mit 1 bis 12 Kohlenstoffatomen, Phenoxy, Alkylamino mit 1 bis 12 Kohlenstoffatomen oder Phenylamino, $Y_{13}$ Alkyl mit 1 bis 18 Kohlenstoffatomen, Phenyl, Alkylphenyl mit 1 bis 8 Kohlenstoffatomen im Alkylrest, $Y_{15}$ Alkylen mit 2 bis 10 Kohlenstoffatomen, Phenylen oder eine Gruppe -Phenylen-M-Phenylen, worin M -O-, -S-, $-SO_2-$, $-CH_2-$ oder $-C(CH_3)_2-$ ist, und $Y_{18}$ Alkylen mit 2 bis 10 Kohlenstoffatomen oder durch Sauerstoff ein- oder mehrfach unterbrochenes Alkylen mit 4 bis 20 Kohlenstoffatomen ist,

in den Verbindungen der Formel (3)

v eine ganze Zahl von 1 bis 3 und w 1 oder 2 ist, und die Substituenten Z unabhängig voneinander Wasserstoff, Halogen, Hydroxyl oder Alkoxy mit 1 bis 12 Kohlenstoffatomen sind.

In den Verbindungen der Formel (1a) kann $R_1$ Wasserstoff oder Alkyl mit 1 bis 20 Kohlenstoffatomen bedeuten, wie Methyl, Aethyl, Propyl Butyl, Hexyl, Octyl, Nonyl, Dodecyl, Tetradecyl, Hexadecyl, Octadecyl, Nonadecyl und Eicosyl sowie entsprechende verzweigte Isomere. Ferner kann $R_1$ Phenylalkyl mit 1 bis 4 Kohlenstoffatomen im Alkylteil, wie z.B. Benzyl sein.

$R_2$ kann neben Wasserstoff und Halogen, z.B. Chlor und Brom, auch Alkyl mit 1 bis 18 Kohlenstoffatomen bedeuten. Beispiele solcher Alkylreste sind in den Definitionen von $R_1$ angegeben. $R_2$ kann ferner Phenylalkyl mit 1 bis 4 Kohlenstoffatomen im Alkylteil, z.B. Benzyl, $\alpha$-Methylbenzyl und Cumyl bedeuten.

Mindestens einer der Reste $R_1$ und $R_2$ muss von Wasserstoff verschieden sein.

$R_3$ ist neben Wasserstoff oder Chlor auch Alkyl mit 1 bis 4 Kohlenstoffatomen, z.B. Methyl, Butyl.

In den Verbindungen der Formel (1b) bedeutet T Wasserstoff oder Alkyl mit 1 bis 6 Kohlenstoffatomen, wie Methyl und Butyl, $T_1$ist neben Wasserstoff oder Chlor auch Alkyl mit 1 bis 4 Kohlenstoffatomen, beispielsweise Methyl, und $T_2$ ist, wenn n 1 ist, Chlor oder ein Rest der Formel $-OT_3$. Hierin ist $T_3$ Wasserstoff oder Alkyl mit 1 bis 18 Kohlenstoffatomen (vgl. Definition von $R_1$). Diese Alkylreste können mit 1 bis 3 Hydroxylgruppen substituiert sein. Des weiteren kann $T_3$ Alkyl mit 3 bis 18 Kohlenstoffatomen bedeuten (vgl. Definition von $R_1$), welches durch -O- ein- oder mehrfach unterbrochen ist und gegebenenfalls durch Hydroxyl substituiert ist. $T_3$ kann ferner Alkenyl mit 2 bis 18 Kohlenstoffatomen bedeuten. Geeignete Alkenylreste leiten sich von den in den Definitionen von $R_1$ aufgezählten Alkylresten ab. Diese Alkenylreste können durch Hydroxyl substituiert sein. Als Phenylalkyl ist $T_3$ z.B. Benzyl, Phenyläthyl, Cumyl, $\alpha$-Methylbenzyl oder Benzyl. Ferner kann $T_3$ ein Rest der Formel $-CH_2CH(OH)-T_7$ sein.

Wenn n 2 ist, bedeutet $T_2$ einen zweiwertigen Rest der Formel $-O-T_9-O-$.

Ausser Wasserstoff und langkettigen Alkylresten kann $T_7$ Phenyl bedeuten.

Der zweiwertige Rest $T_9$ kann Alkylen mit 2 bis 8 Kohlenstoffatomen bedeuten, wobei solche Reste auch verzweigt sein können. Dies trifft auch für den Alkenylenrest $T_9$ zu.

Beispiele für Alkyl-, Alkoxy-, Phenylalkyl-, Alkylen-, Alkenylen-, Alkoxyalkyl- und Cycloalkylreste sowie Alkylthio-, Oxaalkylen- oder Azoalkylenreste in den Verbindungen der Formeln (2) und (3) können den obigen Ausführungen entnommen werden.

Die UV-Absorber der Formeln (1a), (1b), (2) und (3) sind an sich bekannt und beispielsweise mit ihrer Herstellung in EP-A-323,408, EP-A-57,160, EP 0 434 608 (Prio.: 5.12.89), US-A-4,619,956, DE-A-31 35 810 und GB-A-1,336,391 beschrieben.

Bevorzugte Substituentenbedeutungen und Einzelverbindungen können den genannten Dokumenten entnommen werden. Sie können nach üblichen, an sich bekannten Methoden in Lacke bzw. Lackzusammensetzungen eingearbeitet werden. In der Regel betragen die Mengenverhältnisse 0,01 bis 5, insbesondere 0,02 bis 3,0 Gew.-% (aller eingesetzter) UV-Absorber, bezogen auf die Lackzusammensetzung, wobei die zu wählenden Mengen an UV-Absorber von der Natur der Lackzusammensetzung und den Anforderungen an ihre Stabilität abhängig sein können. Die einzelnen UV-Absorberkomponenten können einzeln oder als Gemisch den entsprechenden Lackzusammensetzungen zugefügt werden. Den Zweischichtlacken kann die Zugabe zur Unterschicht und/oder Oberschicht erfolgen. Bevorzugt enthält die Oberschicht die UV-Absorbermischungen. Den Lackzusammensetzungen können auch die üblichen weiteren Zusätze wie

Antioxidantien, Korrosionsschutzmittel und weitere Lichtschutzmittel hinzugefügt werden, ohne dass die Schutzwirkung der erfindungsgemäss eingesetzten UV-Absorbermischungen dadurch beeinträchtigt wird.

Die erfindungsgemässen Lackzusammensetzungen können jede beliebige Art von Lacken umfassen, z.B. pigmentierte oder unpigmentierte Lacke oder Metalleffektlacke sein. Sie können ein organisches Lösungsmittel enthalten oder lösungsmittelfrei sein oder wässrige Lacke sein.

Beispiele für Lacke mit speziellen Bindemitteln sind die folgenden:

1. Lacke auf Basis von kalt- oder heiss-vernetzbaren Alkyd-, Acrylat-, Polyester-, Epoxid- oder Melaminharzen oder Mischungen solcher Harze, gegebenenfalls mit Zusatz eines sauren Härtungskatalysators;
2. Zweikomponenten-Polyurethanlacke auf Basis von hydroxylgruppenhaltigen Acrylat-, Polyester- oder Polyetherharzen und aliphatischen oder aromatischen Polyisocyanaten;
3. Einkomponenten-Polyurethanlacke auf Basis von blockierten Polyisocyanaten, die während des Einbrennens deblockiert werden;
4. Zweikomponentenlacke auf Basis von (Poly)ketiminen und aliphatischen oder aromatischen Polyisocyanaten;
5. Zweikomponentenlacke auf Basis von (Poly)ketiminen und einem ungesättigten Acrylatharz oder einem Polyacetoacetatharz oder einem Methylacrylamidoglykolatmethylester;
6. Zweikomponentenlacke auf Basis von carboxyl- oder aminogruppenhaltigen Polyacrylaten und Polyepoxiden;
7. Zweikomponentenlacke auf Basis von anhydridgruppenhaltigen Acrylatharzen und einer Polyhydroxy- oder Polyaminokomponente;
8. Zweikomponentenlacke auf Basis von (Poly)oxazolidinen und anhydridgruppenhaltign Acrylatharzen oder ungesättigten Acrylatharzen oder aliphatischen oder aromatischen Polyisocyanaten.
9. Zweikomponentenlacke auf Basis von ungesättigten Polyacrylaten und Polymalonaten;
10. thermoplastische Polyacrylatlacke auf Basis von thermoplastischen Acrylatharzen oder fremdvernetzenden Acrylatharzen in Kombination mit veretherten Melaminharzen;
11. Lacksysteme auf Basis von siloxanmodifizierten Acrylatharzen.
12. Lacksysteme auf Basis von fluormodifizierten Acrylatharzen.

Die Lacke können auch strahlenhärtbare Lacke sein. In diesem Fall besteht das Bindemittel aus monomeren oder oligomeren Verbindungen, die ethylenische Doppelbindungen enthalten und durch Bestrahlung mit aktinischem Licht oder mit Elektronenstrahlen in eine vernetzte hochmolekulare Form übergehen. Meist handelt es sich hierbei um ein Gemisch solcher Verbindungen.

Die Lacke können als Einschicht- oder Zweischichtlacke appliziert werden, wobei die erfindungsgemässen Stabilisatoren vorzugsweise der unpigmentierten obersten Schicht zugesetzt werden.

Die Lacke können auf die Substrate (Metall, Plastik, Holz etc.) nach den üblichen Verfahren aufgebracht werden, beispielsweise durch Streichen, Besprühen, Giessen, Tauchen oder Elektrophorese. Besonders bevorzugt stellen die erfindungsgemässen Zusammensetzungen Lacke für Kraftfahrzeuge dar. Geeignete Lacksysteme und Bindemittel sind z.B. in den US-A-4,314,933, 4,344,876, 4,426,471, 4,426,472 und 4,429,077 beschrieben.

Die vorliegende Erfindung betrifft auch Lackfilme, die durch Aufbringen auf eine Oberfläche und Härtung erhältlich ist.

Erfindungsgemäss werden Lackzusammensetzungen bevorzugt, in denen das Molverhältnis von 2-Hydroxyphenylbenztriazol zu 2-Hydroxyphenyltriazin beziehungsweise zu 2-Hydroxybenzophenon in der UV-Absorbermischung 2:1 bis 1:2 beträgt.

Weitere bevorzugte Lackzusammensetzungen enthalten als UV-Absorber eine Mischung aus mindestens einem 2-Hydroxyphenylbenztriazol und mindestens einem 2-Hydroxyphenyltriazin.

In den UV-Absorbermischungen haben sich solche UV-Absorber der Formel (1a) besonders bewährt, worin der Substituent $R_1$ oder $R_2$ in ortho- oder para-Stellung zur Hydroxylgruppe steht.

Dies trifft auch für UV-Absorber der Formel (1a) zu worin $R_1$ Wasserstoff, Alkyl mit 1 bis 20 Kohlenstoffatomen, $R_2$ Wasserstoff, Alkyl mit 1 bis 18 Kohlenstoffatomen, Phenylalkyl mit 1 bis 4 Kohlenstoffatomen im Alkylteil, und $R_3$ Wasserstoff, Chlor oder Alkyl mit 1 bis 4 Kohlenstoffatomen ist, besonders für solche UV-Absorber aus dieser Gruppe, worin $R_1$ in ortho-Stellung zur Hydroxylgruppe steht und Wasserstoff, Alkyl mit 4 bis 12 Kohlenstoffatomen ist, $R_2$ in para-Stellung zur Hydroxylgruppe steht und Alkyl mit 1 bis 6 Kohlenstoffatomen oder Cumyl und $R_3$ Wasserstoff oder Chlor ist, und insbesondere für solche UV-Absorber der Formel (1a), worin $R_1$ Alkyl mit 8 bis 12 Kohlenstoffatomen, $R_2$ Alkyl mit 4 bis 6 Kohlenstoffatomen und $R_3$ Wasserstoff ist.

Geeignete UV-Absorber der Formel (1b) sind dadurch gekennzeichnet, dass T Alkyl mit 1 bis 6 Kohlenstoffatomen, $T_1$ Wasserstoff, Chlor oder Alkyl mit 1 bis 4 Kohlenstoffatomen, n 1 oder 2 und $T_2$, wenn n 1 ist, ein Rest der Formel $-OT_3$, und wenn n 2 ist, ein Rest der Formel $-O-T_9-O-$ ist, worin $T_3$

Wasserstoff, Alkyl mit 1 bis 18 Kohlenstoffatomen oder durch -O- ein- oder mehrfach unterbrochenes Alkyl mit 3 bis 18 Kohlenstoffatomen ist, und $T_9$ Alkylen mit 2 bis 8 Kohlenstoffatomen, Alkenylen mit 4 bis 8 Kohlenstoffatomen oder durch -O- ein- oder mehrfach unterbrochenes Alkylen mit 2 bis 18 Kohlenstoffatomen ist, worin jene UV-Absorber mit Vorteil eingesetzt werden, in denen T Alkyl mit 1 bis 4 Kohlenstoffatomen, $T_1$ Wasserstoff oder Chlor und $T_2$ einer der Reste der Formel $-OT_3$ oder $-O-T_9-O-$ ist, worin $T_3$ Wasserstoff, Alkyl mit 1 bis 12 Kohlenstoffatomen oder ein Rest der Formel $-C_2H_4{(OC_2H_4)}_{4-8}-H$ und $T_9$ Alkylen mit 2 bis 8 Kohlenstoffatomen oder ein Rest der Formel $-C_2H_4{(OC_2H_4)}_{4-8}-O-$ ist.

In besonders geeigneten Verbindungen der Formel (1b) ist $T_3$ Alkyl mit 1 bis 12 Kohlenstoffatomen oder ein Rest der Formel $-C_2H_4{(OC_2H_4)}_{4-8}-H$.

Von den UV-Absorbern der Formel (2) werden solche bevorzugt, worin die Substituenten $Y_1$ Wasserstoff, Alkyl mit 1 bis 12 Kohlenstoffatomen oder Halogen bedeuten, $Y_2$, wenn u 1 ist, Alkyl mit 1 bis 18 Kohlenstoffatomen, durch Hydroxyl, Alkoxy mit 1 bis 18 Kohlenstoffatomen, $-COOY_8$, $-CONY_9Y_{10}$, und/oder $-OCOY_{11}$ substituiertes Alkyl mit 1 bis 12 Kohlenstoffatomen, Glycidyl oder Phenylalkyl mit 1 bis 4 Kohlenstoffatomen im Alkylteil ist, oder $Y_2$, wenn u 2 ist, Alkylen mit 2 bis 16 Kohlenstoffatomen, Alkenylen mit 4 bis 12 Kohlenstoffatomen, Xylylen oder durch ein oder mehrere -O- unterbrochenes und/oder durch Hydroxyl substituiertes Alkylen mit 3 bis 20 Kohlenstoffatomen ist, wobei die Substituenten $Y_8$ bis $Y_{11}$ die oben angegebenen Bedeutungen haben. Insbesondere kommen hiervon jene UV-Absorber in Frage, in denen die Substituenten $Y_1$ Wasserstoff, Alkyl mit 1 bis 4 Kohlenstoffatomen oder Chlor sind, $Y_2$, wenn u 1 ist, unsubstituiertes oder durch Hydroxyl, Alkoxy mit 1 bis 18 Kohlenstoffatomen, $-COOY_8$, $-CONY_9Y_{10}$, und/oder $-OCOY_{11}$ substituiertes Alkyl mit 1 bis 4 Kohlenstoffatomen, Glycidyl oder Benzyl ist, oder $Y_2$, wenn u 2 ist, Alkylen mit 6 bis 12 Kohlenstoffatomen, Butenylen, Xylylen oder durch ein oder mehrere -O- unterbrochenes und/oder durch Hydroxyl substituiertes Alkylen mit 3 bis 20 Kohlenstoffatomen ist, wobei $Y_8$ Alkyl mit 4 bis 12 Kohlenstoffatomen, Alkenyl mit 12 bis 18 Kohlenstoffatomen oder durch ein oder mehrere -O- unterbrochenes und/oder durch Hydroxyl substituiertes Alkyl mit 6 bis 20 Kohlenstoffatomen, ist, $Y_9$ und $Y_{10}$ Alkyl mit 4 bis 8 Kohlenstoffatomen sind, und $Y_{11}$ Alkyl mit 1 bis 8 Kohlenstoffatomen oder Alkenyl mit 2 oder 3 Kohlenstoffatomen ist

Eine weitere zur Verwendung in Lackzusammensetzungen besonders geeignete Gruppe von Verbindungen der Formel (2) ist dadurch gekennzeichnet, dass u 1 und r 2 ist, $Y_1$ Alkyl mit 1 bis 4 Kohlenstoffatomen und $Y_2$ Alkyl mit 1 bis 18 Kohlenstoffatomen oder durch Hydroxyl, Alkoxy mit 1 bis 18 Kohlenstoffatomen, $-COOY_8$ und/oder $-OCOY_{11}$ substituiertes Alkyl mit 1 bis 12 Kohlenstoffatomen ist, worin $Y_8$ Alkyl mit 1 bis 18 Kohlenstoffatomen, Alkenyl mit 3 bis 18 Kohlenstoffatomen oder durch ein oder mehrere Sauerstoffatome unterbrochenes und/oder durch Hydroxyl substituiertes Alkyl mit 3 bis 20 Kohlenstoffatomen und $Y_{11}$ Alkenyl 2 bis 18 Kohlenstoffatomen ist.

Bevorzugt hiervon sind solche Verbindungen, worin $Y_2$ Alkyl mit 1 bis 8 Kohlenstoffatomen oder durch Hydroxyl, Alkoxy mit 12 bis 15 Kohlenstoffatomen, $-COOY_8$ und/oder $-OCOY_{11}$ substituiertes Alkyl mit 1 bis 4 Kohlenstoffatomen ist, worin $Y_8$ Alkyl mit 8 bis 12 Kohlenstoffatomen, Alkenyl mit 12 bis 18 Kohlenstoffatomen oder durch ein Sauerstoffatom unterbrochenes und Hydroxyl substituiertes Alkyl mit 5 bis 10 Kohlenstoffatomen und $Y_{11}$ Alkenyl 2 bis 8 Kohlenstoffatomen ist, und insbesondere jene Verbindungen, worin $Y_1$ Methyl und $Y_2$ ein Octylrest oder durch Hydroxyl, Alkoxy mit 13 oder 15 Kohlenstoffatomen, $-COOY_8$ und/oder $-OCOY_{11}$ substituiertes Alkyl mit 1 bis 3 Kohlenstoffatomen ist, worin $Y_8$ ein Decyl- oder Octadecenylrest oder durch Hydroxyl substituiertes und ein Sauerstoffatom unterbrochenes Alkyl mit 7 Kohlenstoffatomen und $Y_{11}$ Propenyl ist.

Von Interesse sind auch solche UV-Absorber der Formel (3), worin v und w unabhängig voneinander 1 oder 2 sind, und die Substituenten Z unabhängig voneinander Wasserstoff, Halogen oder Alkoxy mit 1 bis 12 Kohlenstoffatomen sind.

Es hat sich als vorteilhaft erwiesen, in Kombination mit erfindungsgemässen UV-Absorbermischungen mindestens ein weiteres Lichtschutzmittel aus der Klasse der gehinderten Amine zu verwenden, insbesondere eine Verbindung, die mindestens einen Rest der Formel

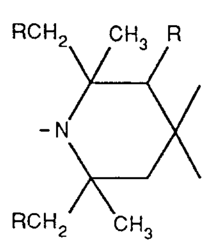

enthält, worin R Wasserstoff oder vorzugsweise Methyl ist. Diese Verbindungen sind aus einer Vielzahl von Publikationen bekannt.

Es handelt sich dabei um Derivate von Polyalkylpiperidinen, insbesondere von 2,2,6,6-Tetramethylpiperidin. Bevorzugt tragen diese Verbindungen in 4-Stellung des Piperidinringes einen oder zwei polare Substituenten oder ein polares Spiro-Ringsystem. Es kann sich bei diesen Verbindungen um niedermolekulare oder oligomere oder polymere Verbindungen handeln.

Von Bedeutung sind insbesondere die folgenden Klassen von Polyalkylpiperidinen.

a) Verbindungen der Formel III,

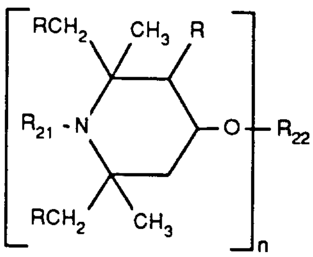

(III),

worin n eine Zahl von 1 bis 4, vorzugsweise 1 oder 2 bedeutet, R Wasserstoff oder Methyl bedeutet, $R_{21}$ Wasserstoff, Oxyl, Hydroxyl, $C_1$-$C_{12}$-Alkyl, $C_3$-$C_8$-Alkenyl, $C_3$-$C_8$-Alkinyl, $C_7$-$C_{12}$-Aralkyl, $C_1$-$C_{18}$Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)$-Z, worin Z Wasserstoff, Methyl oder Phenyl ist, bedeutet, wobei $R_{21}$ vorzugsweise H, $C_1$-$C_4$-Alkyl, Allyl, Benzyl, Acetyl oder Acryloyl ist und $R_{22}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $R_{21}$ oder $R_{22}$ z.B. die oben angeführten Gruppen und dazu noch beispielsweise n-Tridecyl, n-Tetradecyl, n-Hexadecyl oder n-Octadecyl darstellen.

Wenn $R_{21}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert.- Butyl-2-butenyl handeln.

$R_{21}$ ist als $C_3$-$C_8$-Alkinyl bevorzugt Propargyl.

Als $C_7$-$C_{12}$-Aralkyl ist $R_{21}$ insbesondere Phenethyl und vor allem Benzyl.

$R_{21}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $R_{22}$ einen einwertigen Rest einer Carbonsäure, so stellt es beispielsweise einen Essigsäure-, Capronsäure-, Stearinsäure-, Acryl- säure-, Methacrylsäure-, Benzoe- oder $\beta$-(3,5-Di-tert.-butyl-4-hydroxy-phenyl)-propionsäurerest dar.

Bedeutet $R_{22}$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R_{22}$ einen dreiwertigen Rest einer Tricarbonsäure dar, so bedeutet es z.B. einen Trimellitsäure-, Citronensäure- oder Nitrilotriessigsäurerest.

Stellt $R_{22}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R_{22}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel III, worin R Wasserstoff ist, $R_{21}$ Wasserstoff oder Methyl ist, n 1 ist und $R_{22}$ $C_1$-$C_{18}$-Alkyl ist oder n 2 ist und $R_{22}$ der Diacylrest einer aliphatischen Dicarbonsäure mit 4-12 C- Atomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperid-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethylpiperidin)
27) Toluol-2',4'-bis-(4-carbamoyloxy-1-n-propyl-2,2,6,6-tetramethylpiperidin)
28) Dimethyl-bis-(2,2,6,6-tetramethylpiperidin-4-oxy)-silan
29) Phenyl-tris(2,2,6,6-pentamethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel IV,

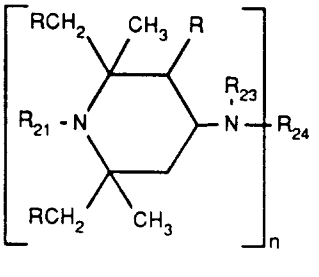

(IV)

worin n die Zahl 1 oder 2 bedeutet, R und $R_{21}$ die unter (a) angegebene Bedeutung haben, $R_{23}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-

Alkenoyl, Benzoyl oder eine Gruppe der Formel

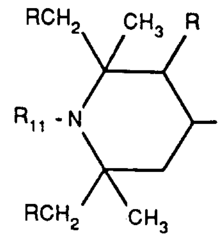

ist und $R_{24}$ wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel -CONH-Z ist, worin Z Wasserstoff, Methyl oder Phenyl bedeutet; wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2$-O-D-O- bedeutet, worin D $C_2$-$C_{10}$-Alkylen, $C_6$-$C_{15}$-Arylen, $C_6$-$C_{12}$-Cycloalkylen ist, oder vorausgesetzt, dass $R_{23}$ nicht Alkanoyl, Alkenoyl oder Benzoyl bedeutet, $R_{24}$ auch einen zweiwertigen Rest einer aliphatischen, cycloaliphatischen oder aromatischen Dicarbonsäure oder Dicarbaminsäure oder auch die Gruppe -CO- bedeuten kann, oder $R_{23}$ und $R_{24}$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter (a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $R_{23}$ insbesondere Phenylethyl oder vor allem Benzyl. Als $C_2$-$C_5$-Hydroxyalkyl ist $R_{23}$ insbesondere 2-Hydroxyethyl oder 2-Hydroxypropyl.

$R_{23}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $R_{24}$ $C_2$-$C_8$-Alkenyl, dann handelt es sich z.B. um Allyl, Methallyl, 2-Butenyl, 2-Pentenyl, 2-Hexenyl oder 2-Octenyl.

$R_{24}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist insbesondere Cyclohexylen zu nennen.

Bevorzugt sind Verbindungen der Formel V, worin n 1 oder 2 ist, R Wasserstoff ist, $R_{21}$ Wasserstoff oder Methyl ist, $R_{23}$ Wasserstoff, $C_1$-$C_{12}$-Alkyl oder eine Gruppe der Formel

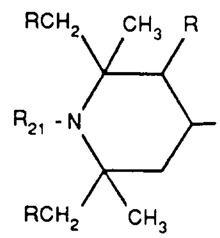

ist und $R_{24}$ im Fall von n = 1 Wasserstoff oder $C_1$-$C_{12}$-Alkyl ist, und im Fall von n = 2 $C_2$-$C_8$-Alkylen ist.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin

38) N,N'-Bis-(2,2,6,6-tetramethylpiperidin-4-yl)-hexamethylen-1,6-di-acetamid

39) Bis-(2,2,6,6-tetramethylpiperidin-4-yl)-amin

40) 4-Benzoylamino-2,2,6,6-tetramethylpiperidin

41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-$\beta$-aminodipropionsäure-di-(2,2,6,6-tetramethylpiperidin-4-yl)-ester
46) Die Verbindung der Formel

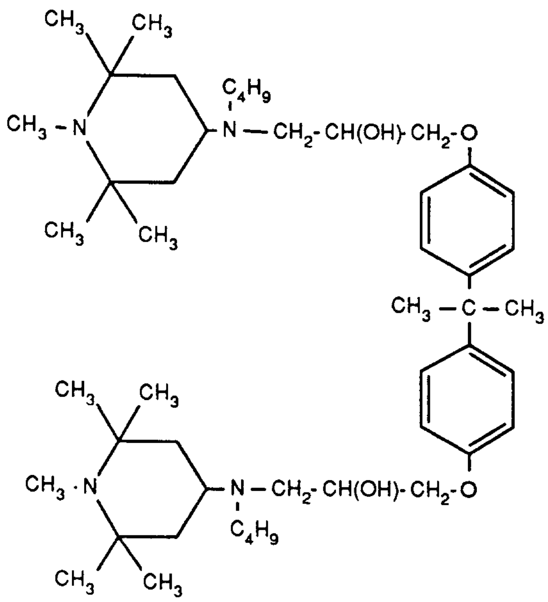

47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetra-methylpiperidin
49) 4-Methacrylamido-1,2,2,6,6-pentamethylpiperidin
49) (a) bis (c) Die Verbindungen der Formel

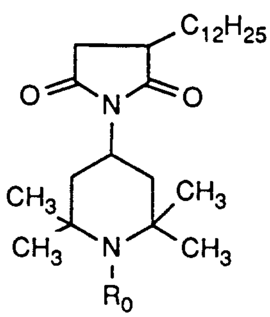

(IV) (a),

worin $R_0$ Wasserstoff, Methyl oder Acetyl ist.
(c) Verbindungen der Formel (V)

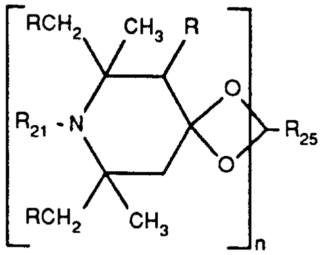

(V)

worin n die Zahl 1 oder 2 bedeutet, R und $R_{21}$ die unter (a) angegebene Bedeutung haben und $R_{25}$, wenn n 1 ist, $C_2$-$C_8$-Alkylen oder -Hydroxyalkylen oder $C_4$-$C_{12}$-Acyloxyalkylen, wenn n 2 ist, die Gruppe $(-CH_2)_2C(CH_2-)_2$ bedeutet.

Bedeutet $R_{25}$ $C_2$-$C_8$-Alkylen oder -Hydroxyalkylen, so stellt es beispielsweise Ethylen, 1-Methylethylen, Propylen, 2-Ethyl-propylen oder 2-Ethyl-2-hydroxymethylpropylen dar.

Als $C_4$-$C_{22}$-Acyloxyalkylen bedeutet $R_{25}$ z.B. 2-Ethyl-2-acetoxymethyl-propylen.

Beispiele für Polyalkylpiperidin-Verbindungen dieser Klasse sind folgende Verbindungen:

50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro [5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5''-(1'',3''-dioxan)-2''-spiro -4'''-(2''',2''',6''',6'''-tetramethylpiperidin).

(d) Verbindungen der Formeln VIA, VIB und VIC

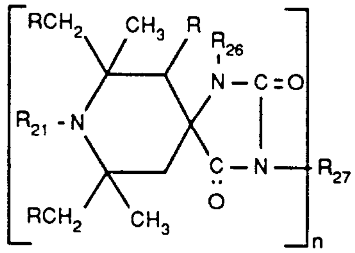

VIA

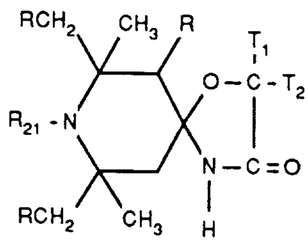

VIB

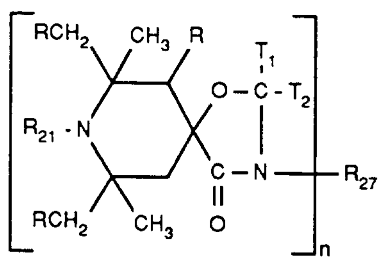

VIC

worin n die Zahl 1 oder 2 bedeutet, R und $R_{21}$ die unter (a) angegebene Bedeutung haben, $R_{26}$ Wasserstoff, $C_1$-$C_{12}$-Alkyl, Allyl, Benzyl, Glycidyl oder $C_2$-$C_6$-Alkoxyalkyl ist und $R_{27}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$ Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$-Alkyl oder Phenyl sind, wenn n 2 ist, $C_2$-$C_{12}$-Alkylen, $C_4$-$C_{12}$-Alkenylen, $C_6$-$C_{12}$-Arylen, eine Gruppe $-CH_2-CH(OH)-CH_2-O-D-O-CH_2-CH(OH)-CH_2-$, worin D $C_2$-$C_{10}$-Alkylen, $C_6$-$C_{15}$-Arylen, $C_6$-$C_{12}$-Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$-Alkyl, Allyl, Benzyl, $C_2$-$C_{12}$-Alkanoyl oder Benzoyl ist, $T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{12}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxy- ethyl, Ethoxypropyl, n-Butoxyethyl, tert.-Butoxyethyl, Isopropoxyethyl oder Propoxypropyl dar.

Stellt $R_{27}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $R_{27}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R_{27}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $R_{17}$, $T_1$ und $T_2$ insbesondere Phenyl, $\alpha$- oder $\beta$-Naphthyl, die gegebenenfalls mit Halogen oder $C_1$-$C_4$-Alkyl substituiert sind.

Stellt $R_{27}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $R_{27}$ insbesondere 2-Butenylen, 2-Pentenylen oder 3-Hexenylen.

Bedeutet $R_{27}$ $C_6$-$C_{12}$-Arylen, so stellt es beispielsweise o-, m- oder p-Phenylen, 1,4-Naphthylen oder 4,4'-Diphenylen dar.

Bedeutet Z' $C_2$-$C_{12}$-Alkanoyl, so stellt es beispielsweise Propionyl, Butyryl, Octanoyl, Dodecanoyl, aber bevorzugt Acetyl dar.

D hat als $C_2$-$C_{10}$-Alkylen, $C_6$-$C_{15}$- Arylen oder $C_6$-$C_{12}$-Cycloalkylen die unter (b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion

57) 3-n-Octyl-1,3,8-triaza-7,7,9,9-tetramethylspiro[4.5]decan-2,4-dion

58) 3-Allyl-1,3,8-triaza-1,7,7,9,9-pentamethylspiro[4.5]decan-2,4-dion

59) 3-Glycidyl-1,3,8-triaza-7,7,8,9,9-pentamethylspiro[4.5jdecan-2,4-dion

60) 1,3,7,7,8,9,9-Heptamethyl-1,3,8-triazaspiro[4.5]decan-2,4-dion

61) 2-Iso-propyl-7,7,9,9-tetramethyl-1-oxa-3,8-diaza-4-oxo-spiro-[4.5]decan

62) 2,2-Dibutyl-7,7,9,9-tetramethyl-1-oxa-3,8-diaza-4-oxo-spiro-[4.5]-decan

63) 2,2,4,4-Tetramethyl-7-oxa-3,20-diaza-21-oxo-dispiro[5.1.11.2]-heneicosan

64) 2-Butyl-7,7,9,9-tetramethyl-1-oxa-4,8-diaza-3-oxo-spiro-[4,5]decan

65) 8-Acetyl-3-dodecyl-1,3,8-triaza-7,7,9,9-tetramethylspiro[4,5]-decan-2,4-dion

oder die Verbindungen der folgenden Formeln:

66)

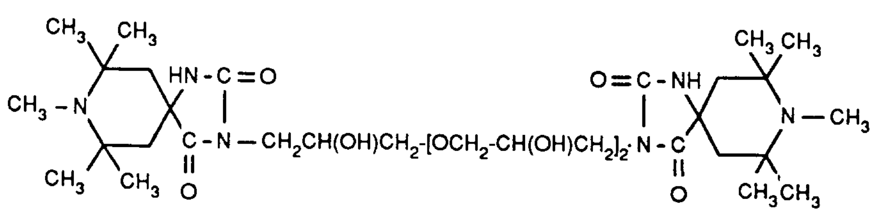

67)

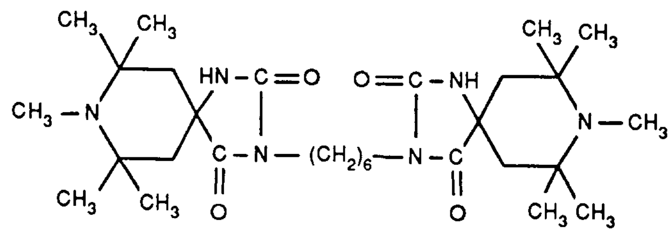

68)

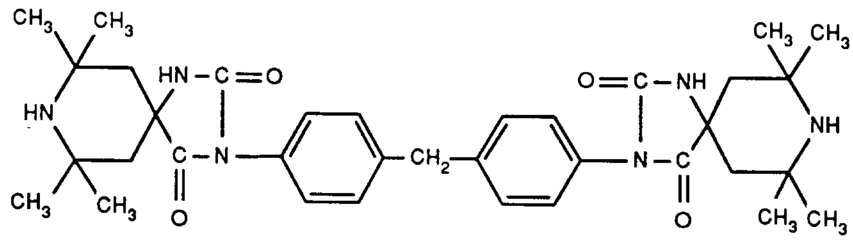

69)

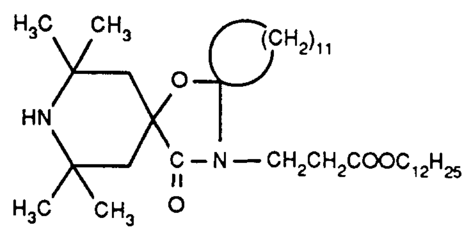

(e) Verbindungen der Formel VII, die ihrerseits bevorzugt sind,

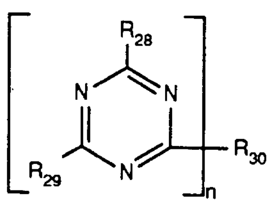

VII

worin n die Zahl 1 oder 2 ist und $R_{28}$ eine Gruppe der Formel

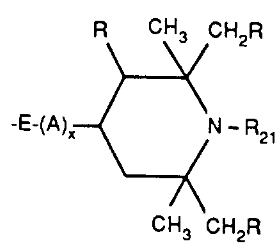

bedeutet, worin R und $R_{21}$ die unter (a) angegebene Bedeutung haben, E -O- oder $-NR_{21}$-ist, A $C_2$-$C_6$-Alkylen oder $-(CH_2)_3$-O- und x die Zahlen O oder 1 bedeuten, $R_{29}$ gleich $R_{28}$ oder eine der Gruppen

$-NR_{31}R_{32}$, $-OR_{33}$, $-NHCH_2OR_{33}$ oder $-N(CH_2OR_{33})_2$ ist, $R_{30}$, wenn n = 1 ist, gleich $R_{28}$ oder $R_{29}$, und wenn n = 2 ist, eine Gruppe -E-B-E- ist, worin B gegebenen- falls durch $-N(R_{31})-$ unterbrochenes $C_2$-$C_6$-Alkylen bedeutet, $R_{11}$ $C_1$-$C_{12}$-Alkyl, Cyclohexyl, Benzyl oder $C_1$-$C_4$-Hydroxyalkyl oder eine Gruppe der Formel

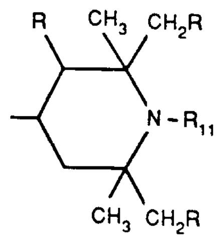

ist, $R_{32}$ $C_1$-$C_{12}$-Alkyl, Cyclohexyl, Benzyl, $C_1$-$C_4$-Hydroxyalkyl und $R_{33}$ Wasserstoff, $C_1$-$C_{12}$-Alkyl oder Phenyl bedeuten oder $R_{31}$ und $R_{32}$ zusammen $C_4$-$C_5$-Alkylen oder -Oxaalkylen, beispielsweise

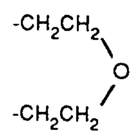

oder eine Gruppe der Formel

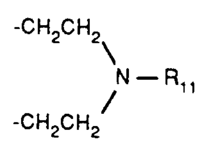

sind oder auch $R_{31}$ und $R_{32}$ jeweils eine Gruppe der Formel

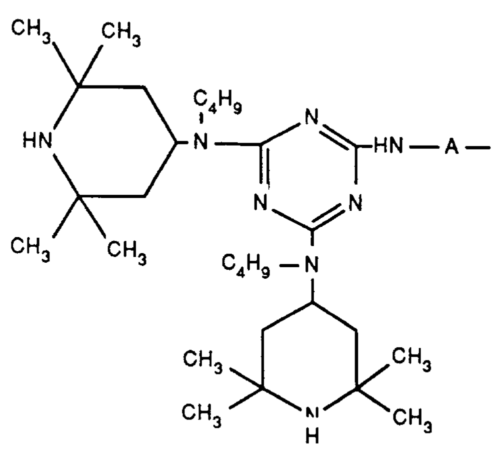

bedeuten.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$-Alkylen, so stellt es beispielsweise Ethylen, Propylen, 2,2-Dimethylpropylen, Tetramethylen oder Hexamethylen dar.

Stellen $R_{31}$ und $R_{32}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

70)

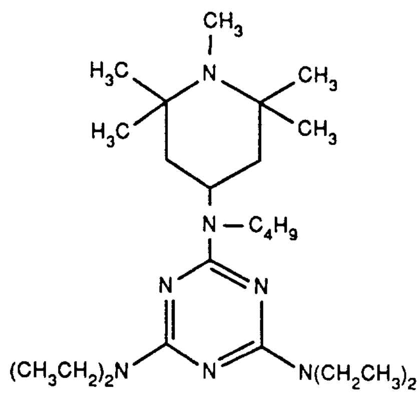

71)

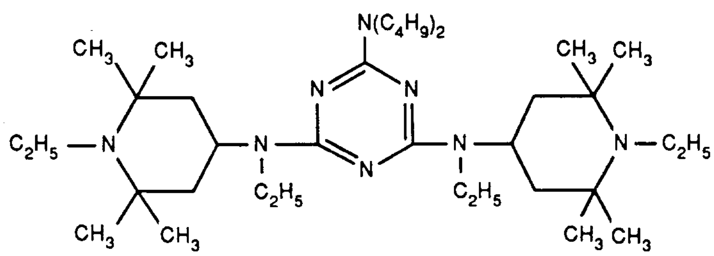

72)

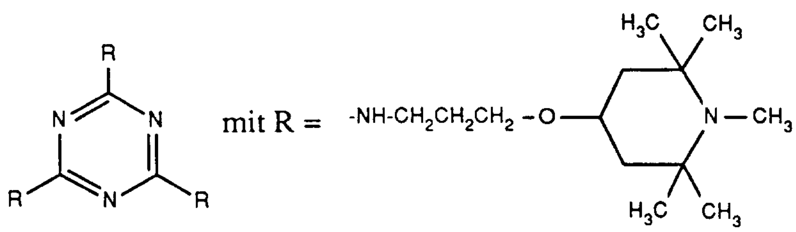

73)

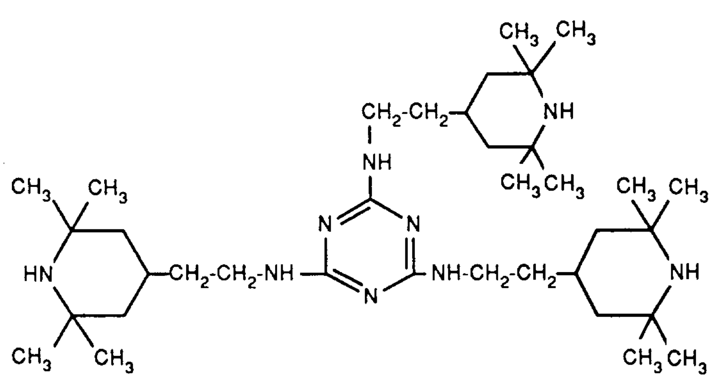

74)

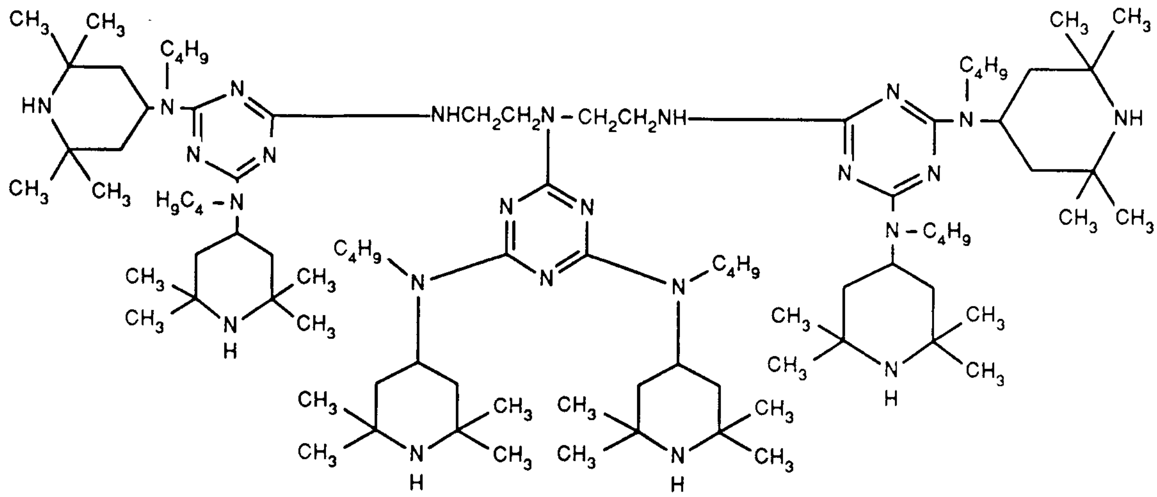

75)

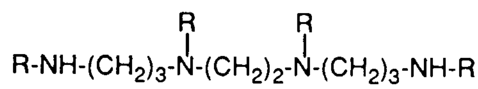

mit R = 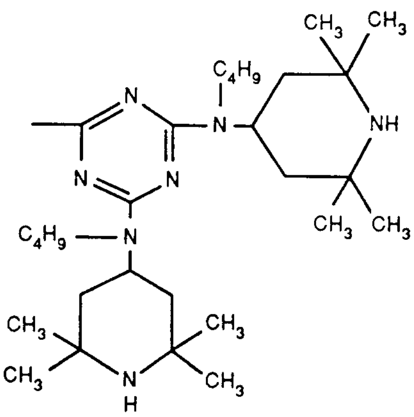

76)

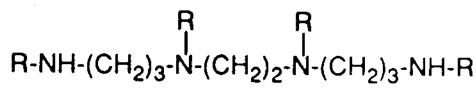

mit R =

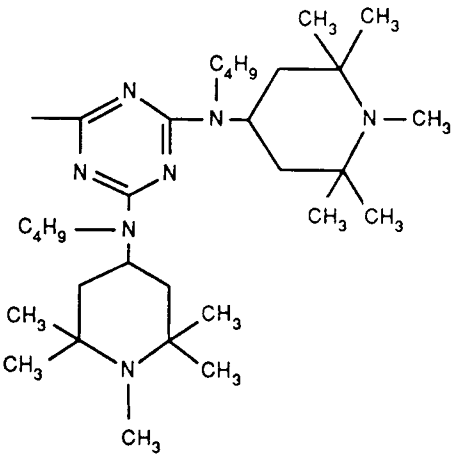

77)

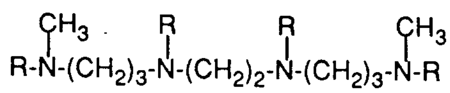

mit R =

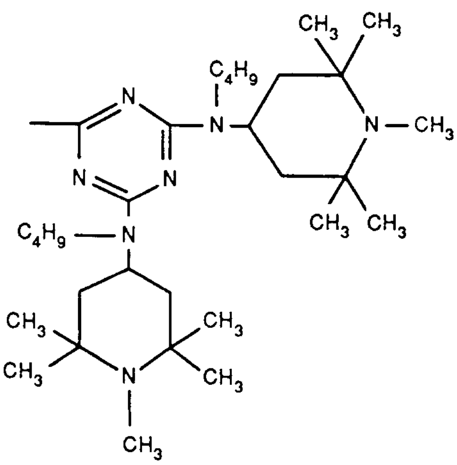

78)

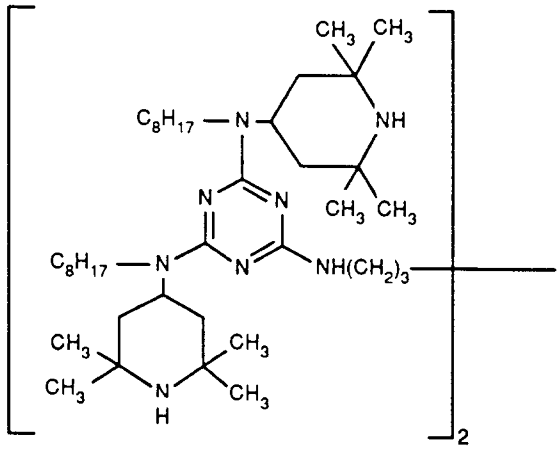

79)

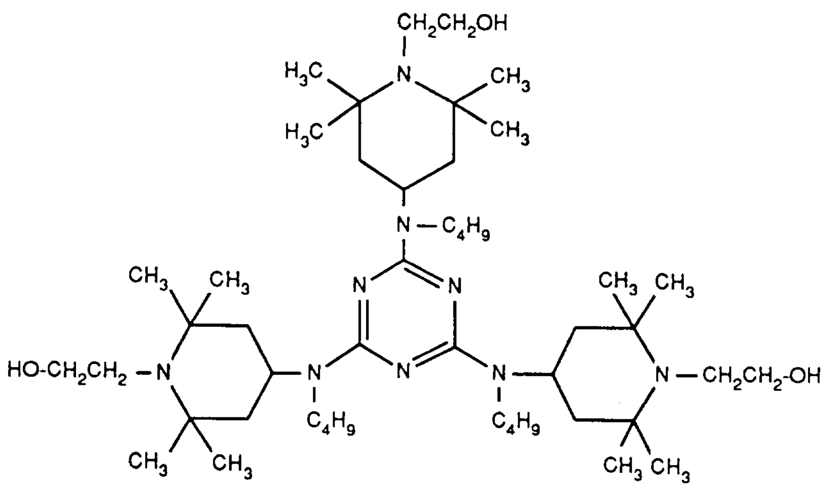

80)

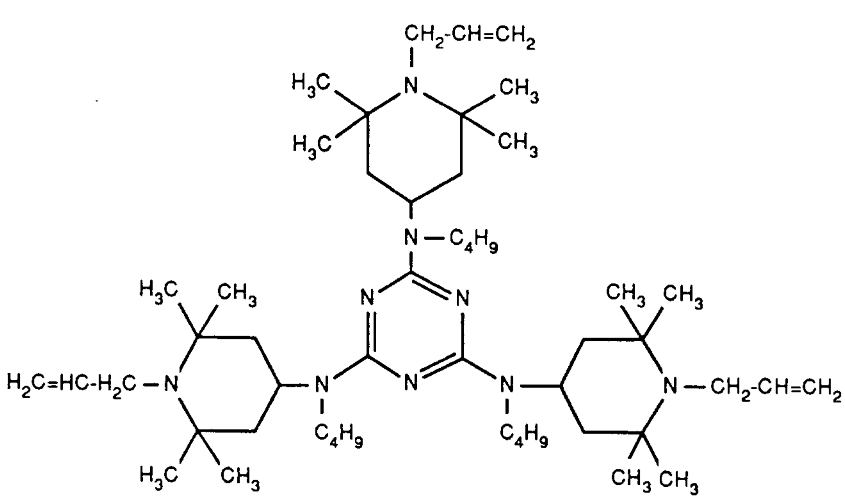

(f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

81)

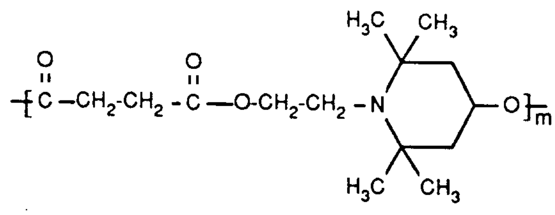

82)

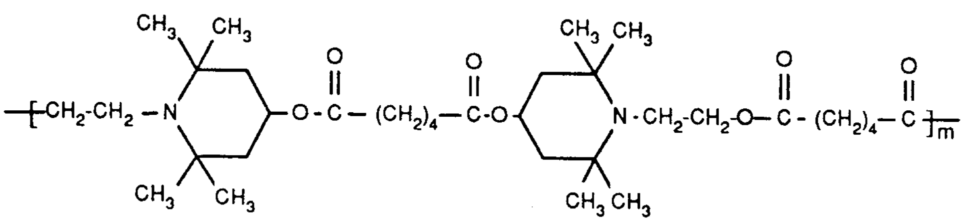

83)

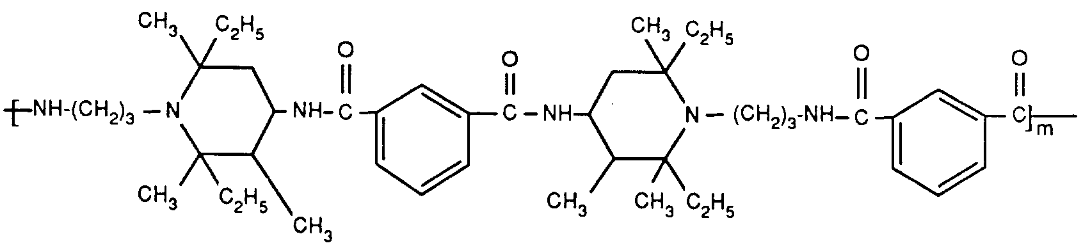

84)

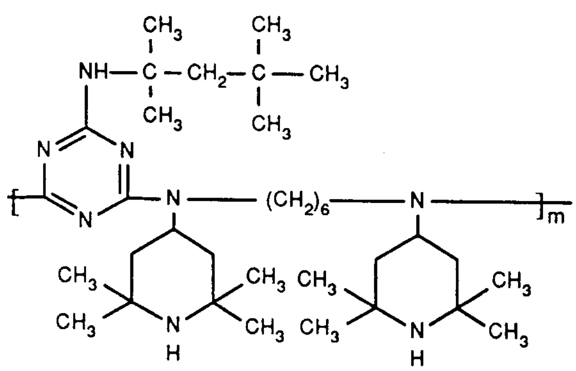

85)

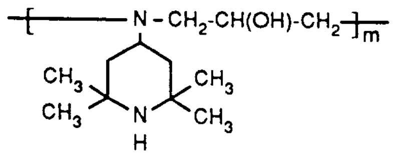

86)

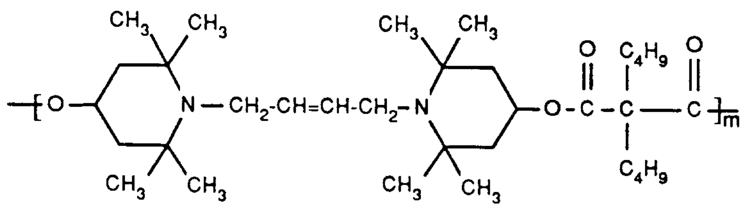

87)

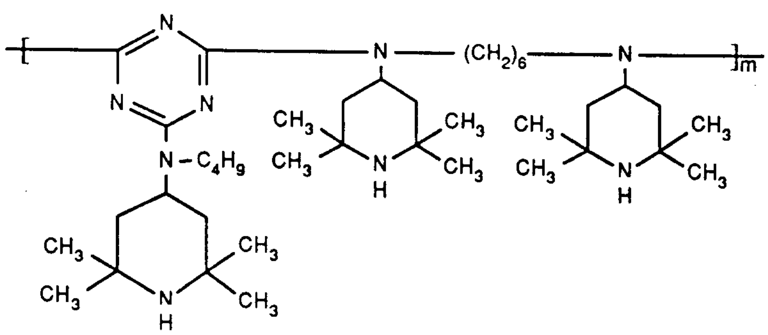

88)

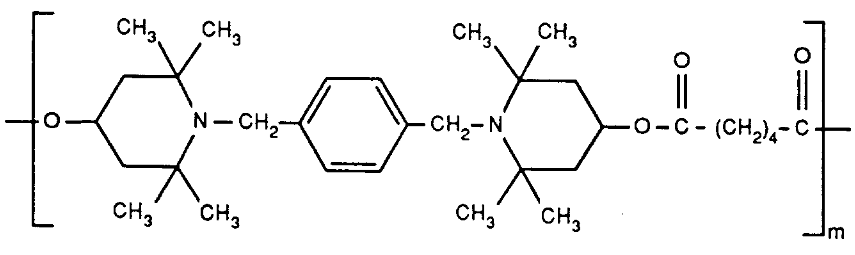

89)

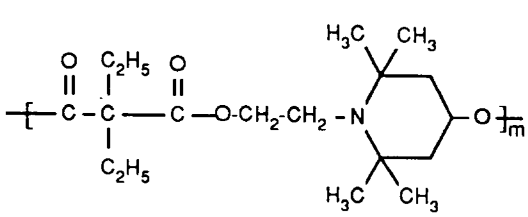

90)

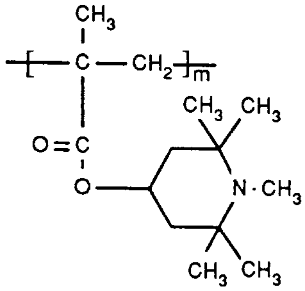

91)

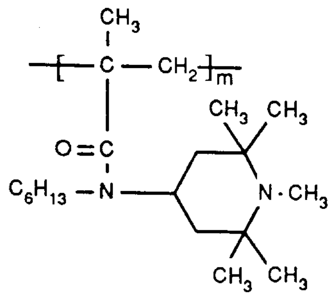

92)

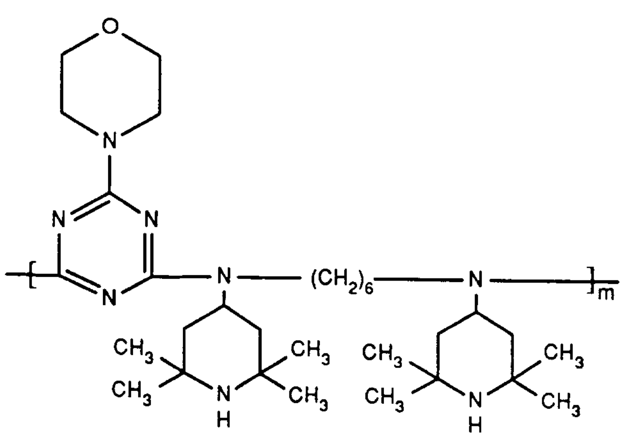

93)

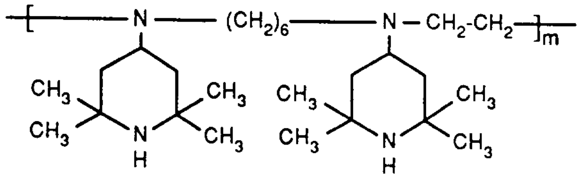

94)

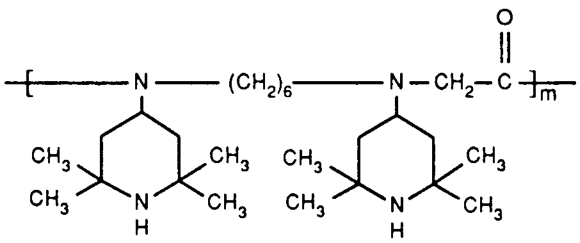

Von diesen Verbindungsklassen sind die Klassen a), d), e) und f) besonders geeignet, insbesondere die Verbindungen Nr. 10, 13, 14, 23, 24, 28, 29, 63, 65, 75, 77, 81, 84, 92 und 93.

Verbindungen der Formel

(5)

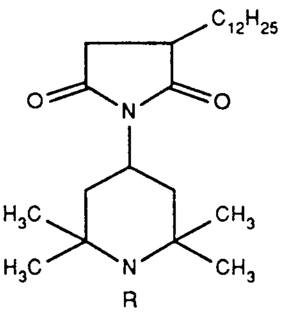

,

worin R Wasserstoff, Methyl oder Acetyl ist, haben in Kombination mit den erfindungsgemäss verwendeten UV-Absorbermischungen zu besonders guten Resultaten geführt.

Das folgende Beispiel erläutert die Erfindung weiter, ohne sie darauf zu beschränken. Teile und Prozente beziehen sich auf das Gewicht, sofern nicht anders angegeben.

Beispiel 1: Die UV-Absorber der Formeln

(100)

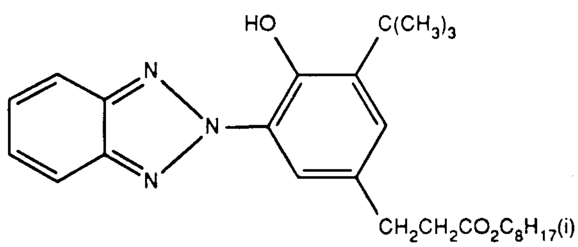

,

(101)

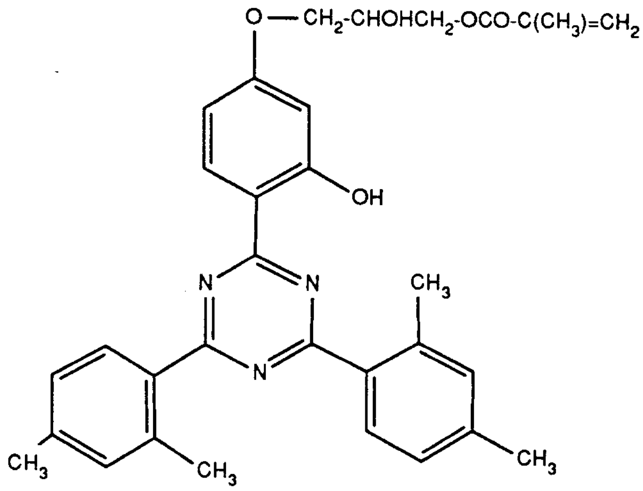

und

(102)

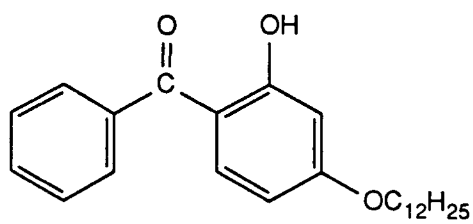

werden in einem Zweischicht-Metalliclack geprüft.

Die UV-Absorber werden in 10 g Xylol eingearbeitet und in den in der nachfolgenden Tabelle zugegebenen Mengen (% reiner UV-Absorber, jeweils bezogen auf Festkörperbestandteile des Lackes) einem Klarlack der folgenden Zusammensetzung zugefügt:

| | |
|---|---|
| Uracron® XB (DSM Resin BV) (50 %) | 59,2 Teile |
| Cymel® 327 (Cyanamid Corp.) (90 %) | 11,6 Teile |
| Butylglykolacetat | 5,5 Teile |
| Xylol | 19,4 Teile |
| Butanol | 3,3 Teile |
| Baysilon® A (Bayer AG) (1 % in Xylol) | 1,0 Teil |

Der Klarlack wird mit einem Gemisch aus Xylol/Butanol/Butylglykolacetat (13:6:1) auf Spritzfähigkeit verdünnt und auf ein vorbereitetes Substrat (coil coat beschichtetes Aluminiumblech, Automobilfiller, silbermetallic Basislack) gespritzt und bei 130 °C 30 Minuten eingebrannt. Es resultiert eine Trcckenschichtdicke von 40-50 µm Klarlack.

Die Proben werden einer beschleunigten Bewitterung unterworfen.

Resultate einer 1600stündigen Bewitterung der Proben in einem Xenon-Weatherometer (CAM 159, Atlas Corp.) sind in der Tabelle 1 zusammengefasst.

Tabelle 1

| Probe mit UV-Absorber der Formel | DOI (%) nach ASTM E 430 |
|---|---|
| 1,5 % (100)<br>1,5 % (101)<br>0.75 % (100) und 0,75 % (101) | 67<br>41<br>87 |
| 1,5 % (100)<br>1,5 % (102)<br>0.75 % (100) und 0,75 % (102) | 67<br>47<br>75 |

Die mit den UV-Absorbermischungen stabilisierten Proben weisen eine höhere Beständigkeit gegen Bewitterung auf als Proben, die nur einen einzigen UV-Absorber in gleicher Menge enthalten.

Beispiel 2: Man wiederholt Beispiel 1 mit den Verbindungen der Formeln (100) und (101), und unterwirft entsprechende Proben auch einer zwölfmonatigen Freibewitterung in Florida. Tabelle 2 zeigt die erhaltenen Ergebnisse:

Tabelle 2

| Probe mit UV-Absorber der Formel | DOI (%bezügl. Ausgangswert) 12 Monate Florida |
|---|---|
| 1,5 % (100)<br>1,5 % (101)<br>0.75 % (100) und 0,75 % (101) | 90<br>90<br>95 |

Beispiel 3: Ein 2K-PUR-Klarlack wird aus den folgenden Komponenten hergestellt:

| | |
|---|---|
| Macrinal® SM 510 (60 %) | 75 Teile |
| Butylglykolacetat | 15 Teile |
| Solvesso® 100 | 6,1 Teile |
| Methylisobutylketon | 3,6 Teile |
| Zinkoctoat (8 %ige toluolische lösung) | 0,1 Teil |
| Byk® 300 | 0,2 Teile |
| | 100,0 Teile |

Diesem Klarlack werden die zu prüfenden UV-Absorber in den angegebenen Mengen, gelöst in 10 ml Xylol zugegeben. Nach Hinzufügen von 30 Teilen Desmodur® N75 als Härter wird mit Xylol auf Spritzfähigkeit verdünnt, der fertige Lack auf ein vorbereitetes Substrat (coil coat beschichtetes Aluminiumblech, Automobilfüller, silbermetallic Basislack) appliziert und bei 90°C 30 Minuten eingebrannt. Es resultiert eine Trockenfilmdicke von ca. 40-50 µm.

Die Proben werden in einem Xenon-Weatherometer (Fa. Atlas; CAM 159; KFA-Methode) bewittert und der 20° Glanz (DIN 67530) gemessen.

Tabelle 3

| Probe mit UV-Absorber der Formel | 20° Glanz nach 800 Stunden |
|---|---|
| 1,6 % (100) | 30 |
| 1,6 % (103) | 48 |
| 1,6 % (104) | 50 |
| 1,6 % (105) | 38 |
| 1,6 % (103) und (105) im Gewichtsverhältnis 1:2 | 60 |
| 1,6 % (103) und (104) im Gewichtsverhältnis 1:2 | 76 |
| 1,6 % (100) und (105) im Gewichtsverhältnis 2:1 | 55 |
| [% bezogen auf Festkörper des Klarlacks (incl. Härter)] | |

Die Verbindungen der Formeln (103), (104) und (105) besitzen die folgende Struktur:
(103) Umsetzungsprodukt von

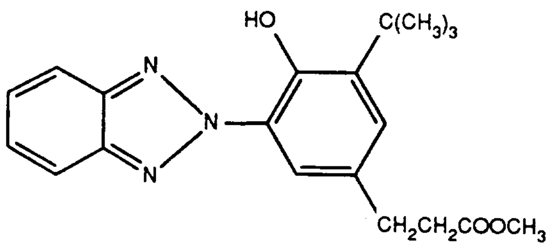

mit Polyäthylenglykol vom Molgewicht 300.
(104)

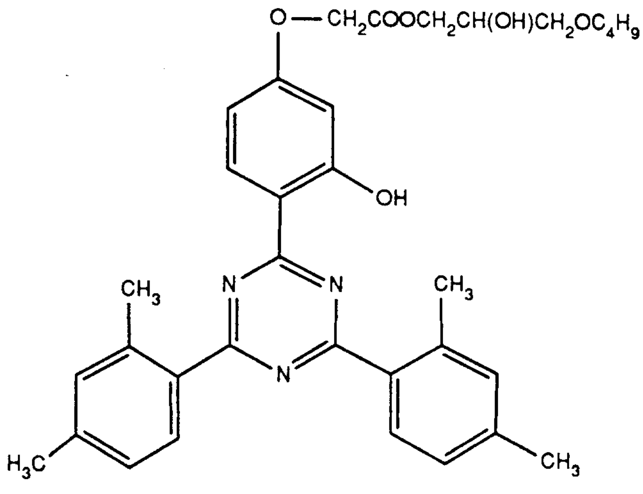

(105)

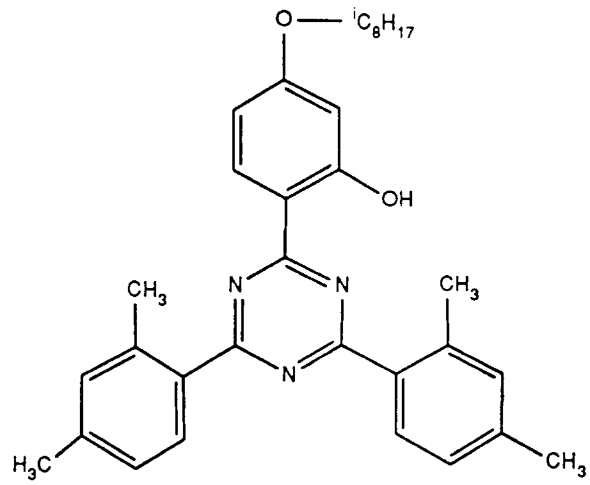

Beispiel 4: Proben gemäss Beispiel 3 mit Verbindungen der Formeln (103), (106) und (107) als UV-Absorber werden einer UVCON-Bewitterung (Atlas, UVB-313, 8 Stunden UV-Belichtung bei 70 °C, 4 Stunden Kondensation bei 50 °C) unterworfen. Anschliessend ermittelt man den 20 ° Glanz (DIN 67530) nach 1600 Stunden Bewitterung.

Tabelle 4

| Probe mit UV-Absorber der Formel | 20 ° Glanz nach 1600 Stunden |
|---|---|
| 1,6 % (103) | 4 |
| 1,6 % (106) | 1 |
| 1,6 % (107) | 8 |
| 1,6 % (103) und (107) im Gewichtsverhältnis 1:2 | 30 |
| 1,6 % (106) und (107) im Gewichtsverhältnis 2:1 | 39 |
| [% bezogen auf Festkörper des Klarlacks (incl. Härter)] | |

Die Verbindungen der Formeln (106) und (107) besitzen die folgende Struktur:

(106)

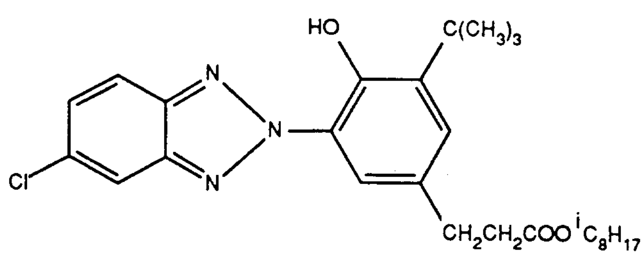

(107)

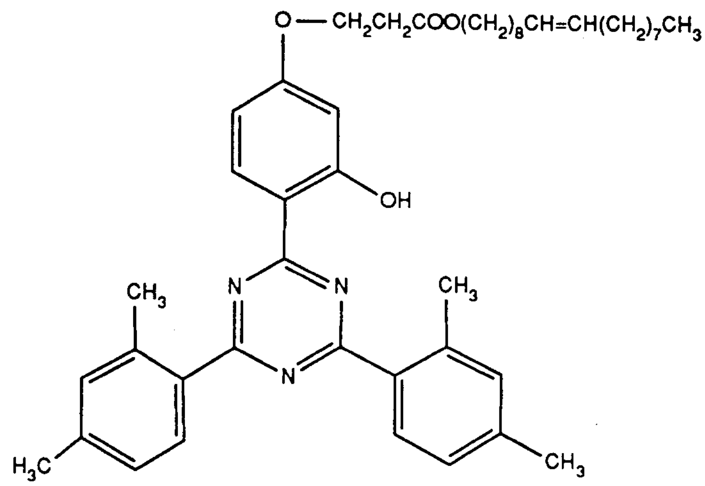

Beispiel 5: Man wiederholt Beispiel 4 mit den Verbindungen der Formeln (108) und (109) als UV-Absorber.

Tabelle 5

| Probe mit UV-Absorber der Formel | 20° Glanz nach 1600 Stunden |
|---|---|
| 1,5 % (108)<br>1,5 % (109)<br>0,75 % (108) und 0,75 % (109) | Riss* nach 1200 Stunden<br>4<br>43 |
| [% bezogen auf Festkörper des Klarlacks (incl. Härter)] | |

* [Rissbildung nach TNO-Skala]

Die Verbindungen der Formeln (108) und (109) besitzen die folgende Struktur:
(108)

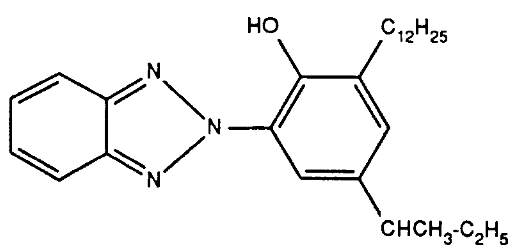

(109)

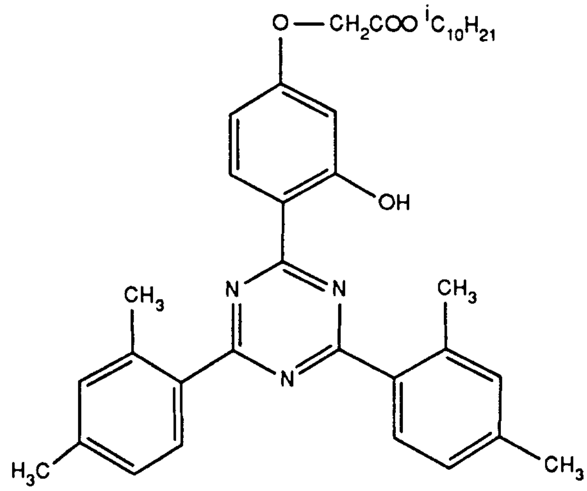

Beispiel 6: Das Lacksystem gemäss Beispiel 2 wird mit den Verbindungen der Formeln (105), (106) und (109) als UV-Absorber auf Uniprime (Fa. PPG; ED 3150) beschichtete Aluminiumbleche appliziert und wie folgt bewittert: QUV (Q-Panel; UVA-340; 8 Stunden UV-Belichtung bei 70 °C; 4 Stunden Kondensation bei 50 °C). Danach wird die Veränderung des Yellowness-Index (ΔYI, ASTM D 1925) und der Farbabstand ΔE (DIN 6174; bewittert/unbewittert) ermittelt.

Tabelle 6

| Probe mit UV-Absorber der Formel | Δ YI | Δ E |
|---|---|---|
| | nach 500 Stunden | |
| 1,5 % (106) | 4,0 | 0,8 |
| 1,5 % (105) | 4,8 | 1,3 |
| 1,5 % (109) | 7,1 | 1,9 |
| 0,75 % (106) und 0,75 % (105) | 2,3 | 0,3 |
| 0,75 % (106) und 0,75 % (109) | 1,7 | 0,2 |
| [% bezogen auf Festkörper des Klarlacks (incl. Härter)] | | |

Beispiel 7: Man stellt einen Klarlack folgender Zusammensetzung her:

| | |
|---|---|
| Uracron® 2263 XB (50 %) | 54,5 Teile |
| Cymel® 327 (90 %) | 16,3 Teile |
| Butylglykolacetat | 5,5 Teile |
| Xylol | 19,4 Teile |
| n-Butanol | 3,3 Teile |
| Baysilon® A (1 % in Xylol) | 1 Teil |
| | 100,0 Teile |

Die zu prüfenden UV-Absorber der Formeln (103) und (110) werden, gelöst in 10 g Xylol, in diesen Klarlack eingearbeitet. Mit einer Mischung aus Xylol, Butanol und Butylglykolacetat (Gewichtsverhältnis 13:6:1) wird der Klarlack auf Spritzfähigkeit verdünnt und auf ein Glasplättchen appliziert. Nach dem Einbrennen (130 °C, 30 Minuten) resultiert eine Trockenfilmdicke von etwa 20 µm. Nach einer UVCON-Bewitterung (Atlas; UVB-313; 8 Stunden UV-Bestrahlung bei 70 °C, 4 Stunden Kondensation bei 50 °C) wird mittels UV-Spektroskopie der Verlust an UV-Absorber bestimmt.

Tabelle 7

| Probe mit UV-Absorber der Formel | λmax | Verlust an UV-Absorber nach 1000 Stunden |
|---|---|---|
| 2 % (103) | 342 | 30 % |
| 2 % (110) | 338 | 21 % |
| 1 % (103) und 1 % (110) | 339 | 16 % |
| [% bezogen auf Klarlackfestkörper] | | |

Die Verbindung der Formel (110) besitzt folgende Struktur:
(110)

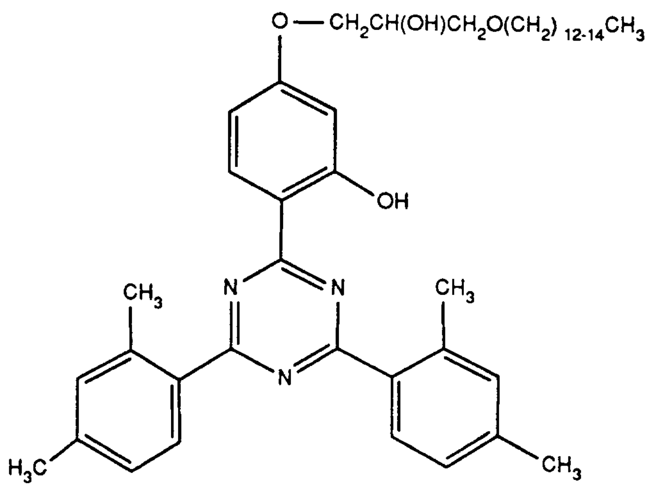

Beispiel 8: Das Lacksystem gemäss Beispiel 7 mit den Verbindungen der Formeln (103) und (110) als UV-Absorber wird auf Uniprime (Fa. PPG; ED 3150) beschichtete Aluminiumbleche appliziert und einer UVCON-Bewitterung wie in Beispiel 7 beschrieben ausgesetzt. Danach wird an den Proben der Gitterschnitt gemäss DIN 53151 mit anschliessendem Bandabreisstest ausgeführt. Die Gitterschnittbewertung erfolgt ebenfalls nach DIN 53151.

Tabelle 8

| Probe mit UV-Absorber der Formel | Bewertung |
|---|---|
| 2 % (103) | Gt 3 - 4 |
| 2 % (110) | Gt 1 - 2 |
| 1 % (103) und 1 % (110) | Gt 0 |

[% bezogen auf Klarlackfestkörper ]

## Patentansprüche

1. Lackzusammensetzung, dadurch gekennzeichnet, dass sie als UV-Absorber 0,01 bis 5 Gew.-% einer Mischung aus mindestens einem 2-Hydroxyphenylbenztriazol und mindestens einem 2-Hydroxyphenyltriazin oder 2-Hydroxybenzophenon enthält, und 2-Hydroxyphenylbenztriazol zu 2-Hydroxyphenyltriazin bzw. 2-Hydroxyphenylbenztriazol zu 2-Hydroxybenzophenon im Molverhältnis von 3:1 bis 1:3 vorliegt, wobei das 2-Hydroxyphenylbenztriazol der Formel

(1a) 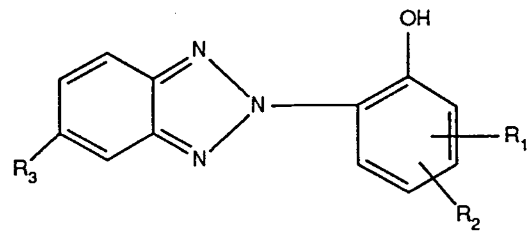 oder

(1b) 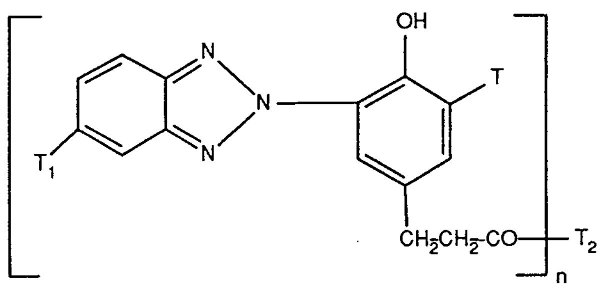 ,

das 2- Hydroxyphenyltriazin der Formel

(2) 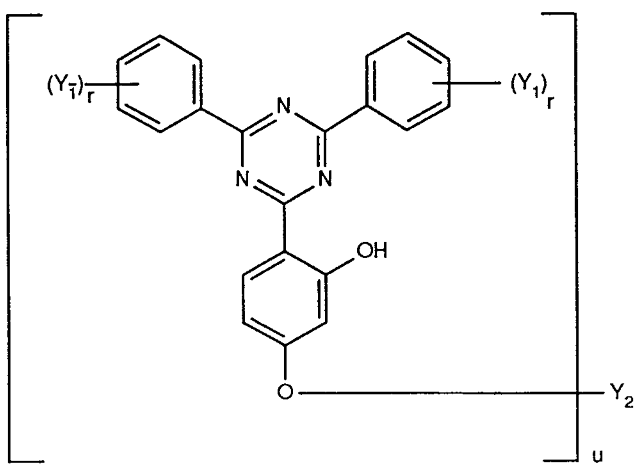

und
das 2-Hydroxybenzophenon der Formel

(3) 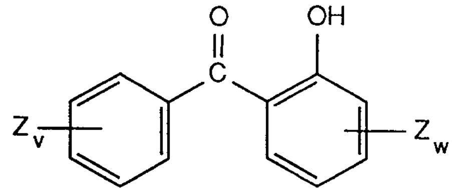

entspricht, worin
in den Verbindungen der Formel (1a)
$R_1$ Wasserstoff, Alkyl mit 1 bis 24 Kohlenstoffatomen oder Phenylalkyl mit 1 bis 4 Kohlenstoffatomen im Alkylteil,
$R_2$ Wasserstoff, Halogen, Alkyl mit 1 bis 18 Kohlenstoffatomen oder Phenylalkyl mit 1 bis 4 Kohlenstoffatomen im Alkylteil, und
$R_3$ Wasserstoff, Chlor oder Alkyl mit 1 bis 4 Kohlenstoffatomen, bedeutet, wobei mindestens einer der Reste $R_1$ und $R_2$ von Wasserstoff verschieden ist,
in den Verbindungen der Formel (1b)
T Wasserstoff oder Alkyl mit 1 bis 6 Kohlenstoffatomen,
$T_1$ Wasserstoff, Chlor oder Alkyl mit 1 bis 4 Kohlenstoffatomen,
n 1 oder 2 und
$T_2$, wenn n 1 ist, Chlor oder ein Rest der Formel $-OT_3$ und wenn n 2 ist, ein Rest der Formel $-O-T_9-O-$ ist, worin
$T_3$ Wasserstoff, gegebenenfalls durch 1 bis 3 Hydroxylgruppen substituiertes Alkyl mit 1 bis 18 Kohlenstoffatomen, durch -O- ein- oder mehrfach unterbrochenes Alkyl mit 3 bis 18 Kohlenstoffatomen, das gegebenenfalls durch Hydroxyl substituiert ist, gegebenenfalls durch Hydroxyl substituiertes Alkenyl mit 2 bis 18 Kohlenstoffatomen, Phenylalkyl mit 1 bis 4 Kohlenstoffatomen im Alkylteil oder ein Rest der Formel $-CH_2CH(OH)-T_7$ ist,
$T_7$ Wasserstoff, Alkyl mit 1 bis 18 Kohlenstoffatomen oder Phenyl,
$T_9$ Alkylen mit 2 bis 8 Kohlenstoffatomen, Alkenylen mit 4 bis 8 Kohlenstoffatomen, Cyclohexylen oder durch -O- ein- oder mehrfach unterbrochenes Alkylen mit 2 bis 18 Kohlenstoffatomen
in den Verbindungen der Formel (2)
u 1 oder 2 ist, und
r eine ganze Zahl von 1 bis 3 bedeutet, die Substituenten
$Y_1$ unabhängig voneinander Wasserstoff, Hydroxyl, Halogenmethyl, Alkyl mit 1 bis 12 Kohlenstoffatomen, Alkoxy mit 1 bis 18 Kohlenstoffatomen oder Halogen bedeuten, $Y_2$, wenn u 1 ist, Alkyl mit 1 bis 18 Kohlenstoffatomen, durch Hydroxyl, Alkoxy mit 1 bis 18 Kohlenstoffatomen, Halogen, -COOH, $-COOY_8$, $-CONH_2$, $-CONHY_9$, $-CONY_9Y_{10}$, -CN und/oder $-OCOY_{11}$ substituiertes Alkyl mit 1 bis 12 Kohlenstoffatomen, durch ein oder mehrere Sauerstofftatome unterbrochenes und gegebenenfalls durch Hydroxyl oder Alkoxy mit 1 bis 12 Kohlenstoffatomen substituiertes Alkyl mit 4 bis 20 Kohlenstoffatomen, Alkenyl mit 3 bis 6 Kohlenstoffatomen, Glycidyl, unsubstituiertes oder durch Hydroxyl, Chlor und/oder Methyl substituiertes Phenylalkyl mit 1 bis 5 Kohlenstoffatomen im Alkylteil, $-COY_{12}$ oder $-SO_2Y_{13}$ bedeutet, oder
$Y_2$ wenn u 2 ist, Alkylen mit 2 bis 16 Kohlenstoffatomen, Alkenylen mit 4 bis 12 Kohlenstoffatomen, Xylylen, durch ein oder mehrere -O- unterbrochenes und/oder durch Hydroxyl substituiertes Alkylen mit 3 bis 20 Kohlenstoffatomen, $-CH_2CH(OH)CH_2-O-Y_{15}-OCH_2CH(OH)CH_2$, oder $-(CH_2)_m-CO_2-Y_{18}-OCO-(CH_2)_m-$ ist, worin
m 1, 2 oder 3 ist,
$Y_8$ Alkyl mit 1 bis 18 Kohlenstoffatomen, Alkenyl mit 3 bis 18 Kohlenstoffatomen, durch ein oder mehrere Sauerstoffatome unterbrochenes und/oder durch Hydroxyl substituiertes Alkyl mit 3 bis 20 Kohlenstoffatomen, Glycidyl oder Phenylalkyl mit 1 bis 5 Kohlenstoffatomen im Alkylteil bedeutet,
$Y_9$ und $Y_{10}$ unabhängig voneinander Alkyl mit 1 bis 12 Kohlenstoffatomen, Alkoxyalkyl mit 3 bis 12 Kohlenstoffatomen, Dialkylaminoalkyl mit 4 bis 16 Kohlenstoffatomen oder Cycloalkyl mit 5 bis 12 Kohlenstoffatomen bedeuten,
$Y_{11}$ Alkyl mit 1 bis 18 Kohlenstoffatomen, Alkenyl mit 2 bis 18 Kohlenstoffatomen oder Phenyl,
$Y_{12}$ Alkyl mit 1 bis 18 Kohlenstoffatomen, Alkenyl mit 2 bis 18 Kohlenstoffatomen, Phenyl, Alkoxy mit 1 bis 12 Kohlenstoffatomen, Phenoxy, Alkylamino mit 1 bis 12 Kohlenstoffatomen oder Phenylamino,
$Y_{13}$ Alkyl mit 1 bis 18 Kohlenstoffatomen, Phenyl, Alkylphenyl mit 1 bis 8 Kohlenstoffatomen im

Alkylrest,
$Y_{15}$ Alkylen mit 2 bis 10 Kohlenstoffatomen, Phenylen oder eine Gruppe -Phenylen-M-Phenylen-, worin M -O-, -S-, $-SO_2-$, $-CH_2-$ oder $-C(CH_3)_2-$ ist, und
$Y_{18}$ Alkylen mit 2 bis 10 Kohlenstoffatomen oder durch Sauerstoff ein- oder mehrfach unterbrochenes Alkylen mit 4 bis 20 Kohlenstoffatomen ist,
in den Verbindungen der Formel (3)
v eine ganze Zahl von 1 bis 3 und w 1 oder 2 ist, und die Substituenten Z unabhängig voneinander Wasserstoff, Halogen, Hydroxyl oder Alkoxy mit 1 bis 12 Kohlenstoffatomen sind.

**2.** Lackzusammensetzung nach Anspruch 1, dadurch gekennzeichnet, dass in der Mischung das 2-Hydroxyphenylbenztriazol zu 2-Hydroxyphenyltriazin bzw. das 2-Hydroxyphenylbenztriazol zu 2-Hydroxybenzophenon im Molverhältnis von 2:1 bis 1:2 vorliegt.

**3.** Lackzusammensetzung nach Anspruch 1, dadurch gekennzeichnet, dass sich der Substituent $R_1$ oder $R_2$ in den Verbindungen der Formel (1a) in ortho- oder para-Stellung zur Hydroxylgruppe befindet.

**4.** Lackzusammensetzung nach Anspruch 1, dadurch gekennzeichnet, dass in den Verbindungen der Formel (1a) $R_1$ Wasserstoff, Alkyl mit 1 bis 20 Kohlenstoffatomen,
$R_2$ Wasserstoff, Alkyl mit 1 bis 18 Kohlenstoffatomen, Phenylalkyl mit 1 bis 4 Kohlenstoffatomen im Alkylteil, und $R_3$ Wasserstoff, Chlor oder Alkyl mit 1 bis 4 Kohlenstoffatomen ist.

**5.** Lackzusammensetzung nach Anspruch 4, dadurch gekennzeichnet, dass $R_1$ in ortho-Stellung zur Hydroxylgruppe steht und Wasserstoff, Alkyl mit 4 bis 12 Kohlenstoffatomen ist, $R_2$ in para-Stellung zur Hydroxylgruppe steht und Alkyl mit 1 bis 6 Kohlenstoffatomen oder Cumyl und $R_3$ Wasserstoff oder Chlor ist.

**6.** Lackzusammensetzung nach Anspruch 5, dadurch gekennzeichnet, dass $R_1$ Alkyl mit 8 bis 12 Kohlenstoffatomen, $R_2$ Alkyl mit 4 bis 6 Kohlenstoffatomen und $R_3$ Wasserstoff ist.

**7.** Lackzusammensetzung nach Anspruch 1, dadurch gekennzeichnet, dass in den Verbindungen der Formel (1b) 1 Alkyl mit 1 bis 6 Kohlenstoffatomen,
$T_1$ Wasserstoff, Chlor oder Alkyl mit 1 bis 4 Kohlenstoffatomen,
n 1 oder 2 und
$T_2$, wenn n 1 ist, der Rest der Formel $-OT_3$, und wenn n 2 ist, ein Rest der Formel $-O-T_9-O-$ ist, worin
$T_3$ Wasserstoff, Alkyl mit 1 bis 18 Kohlenstoffatomen, oder durch -O- ein- oder mehrfach unterbrochenes Alkyl mit 3 bis 18 Kohlenstoffatomen ist, und
$T_9$ Alkylen mit 2 bis 8 Kohlenstoffatomen, Alkenylen mit 4 bis 8 Kohlenstoffatomen oder durch -O- ein- oder mehrfach unterbrochenes Alkylen mit 2 bis 18 Kohlenstoffatomen sind.

**8.** Lackzusammensetzung nach Anspruch 7, dadurch gekennzeichnet, dass T Alkyl mit 1 bis 4 Kohlenstoffatomen, $T_1$ Wasserstoff oder Chlor und $T_2$ einer der Reste der Formel $-OT_3$ oder $-O-T_9-O-$ ist, worin $T_3$ Wasserstoff, Alkyl mit 1 bis 12 Kohlenstoffatomen oder ein Rest der Formel $-C_2H_4(OC_2H_4)_{4-8}-H$ und $T_9$ Alkylen mit 2 bis 8 Kohlenstoffatomen oder ein Rest der Formel $-C_2H_4(OC_2H_4)_{4-8}-O-$ ist.

**9.** Lackzusammensetzung nach Anspruch 8, dadurch gekennzeichnet, dass $T_2$ ein Rest der Formel $-OT_3$ und $T_3$ Alkyl mit 1 bis 12 Kohlenstoffatomen oder ein Rest der Formel $-C_2H_4(OC_2H_4)_{4-8}-H$ ist.

**10.** Lackzusammensetzung nach Anspruch 1, dadurch gekennzeichnet, dass in den Verbindungen der Formel (2) die Substituenten
$Y_1$ Wasserstoff, Alkyl mit 1 bis 12 Kohlenstoffatomen oder Halogen bedeuten,
$Y_2$, wenn u 1 ist, Alkyl mit 1 bis 18 Kohlenstoffatomen, durch Hydroxyl, Alkoxy mit 1 bis 18 Kohlenstoffatomen, $-COOY_8$, $-CONY_9Y_{10}$, und/oder $-OCOY_{11}$ substituiertes Alkyl mit 1 bis 12 Kohlenstoffatomen, Glycidyl oder Phenylalkyl mit 1 bis 4 Kohlenstoffatomen im Alkylteil ist, oder
$Y_2$, wenn u 2 ist, Alkylen mit 2 bis 16 Kohlenstoffatomen, Alkenylen mit 4 bis 12 Kohlenstoffatomen, Xylylen oder durch ein oder mehrere -O- unterbrochenes und/oder durch Hydroxyl substituiertes Alkylen mit 3 bis 20 Kohlenstoffatomen, ist wobei die Substituenten $Y_8$ bis $Y_{11}$ die in Anspruch 1 angegebenen Bedeutungen haben.

**11.** Lackzusammensetzung nach Anspruch 10, dadurch gekennzeichnet, dass die Substituenten $Y_1$ Wasserstoff, Alkyl mit 1 bis 4 Kohlenstoffatomen oder Chlor sind,
$Y_2$, wenn u 1 ist, unsubstituiertes oder durch Hydroxyl, Alkoxy mit 1 bis 18 Kohlenstoffatomen, -COO$Y_8$, -CON$Y_9Y_{10}$, und/oder -OCO$Y_{11}$ substituiertes Alkyl mit 1 bis 4 Kohlenstoffatomen, Glycidyl oder Benzyl ist, oder
$Y_2$, wenn u 2 ist, Alkylen mit 6 bis 12 Kohlenstoffatomen, Butenylen, Xylylen oder durch ein oder mehrere -O- unterbrochenes und/oder durch Hydroxyl substituiertes Alkylen mit 3 bis 20 Kohlenstoffatomen ist, wobei
$Y_8$ Alkyl mit 4 bis 12 Kohlenstoffatomen, Alkenyl mit 12 bis 18 Kohlenstoffatomen oder durch ein oder mehrere -O- unterbrochenes und/oder durch Hydroxyl substituiertes Alkyl mit 6 bis 20 Kohlenstoffatomen, ist
$Y_9$ und $Y_{10}$ unabhängig voneinander Alkyl mit 4 bis 8 Kohlenstoffatomen sind, und
$Y_{11}$ Alkyl mit 1 bis 8 Kohlenstoffatomen oder Alkenyl mit 2 oder 3 Kohlenstoffatomen ist.

**12.** Lackzusammensetzung nach Anspruch 10, dadurch gekennzeichnet, dass u 1 und r 2 ist,
$Y_1$ Alkyl mit 1 bis 4 Kohlenstoffatomen und
$Y_2$ Alkyl mit 1 bis 18 Kohlenstoffatomen oder durch Hydroxyl, Alkoxy mit 1 bis 18 Kohlenstoffatomen, -COO$Y_8$ und/oder -OCO$Y_{11}$ substituiertes Alkyl mit 1 bis 12 Kohlenstoffatomen ist, worin
$Y_8$ Alkyl mit 1 bis 18 Kohlenstoffatomen, Alkenyl mit 3 bis 18 Kohlenstoffatomen oder durch ein oder mehrere Sauerstoffatome unterbrochenes und/oder durch Hydroxyl substituiertes Alkyl mit 3 bis 20 Kohlenstoffatomen und
$Y_{11}$ Alkenyl 2 bis 18 Kohlenstoffatomen ist.

**13.** Lackzusammensetzung nach Anspruch 12, dadurch gekennzeichnet, dass $Y_2$ Alkyl mit 1 bis 8 Kohlenstoffatomen oder durch Hydroxyl, Alkoxy mit 12 bis 15 Kohlenstoffatomen, -COO$Y_8$ und/oder -OCO$Y_{11}$ substituiertes Alkyl mit 1 bis 4 Kohlenstoffatomen ist, worin
$Y_8$ Alkyl mit 8 bis 12 Kohlenstoffatomen, Alkenyl mit 12 bis 18 Kohlenstoffatomen oder durch ein Sauerstoffatom unterbrochenes und Hydroxyl substituiertes Alkyl mit 5 bis 10 Kohlenstoffatomen und
$Y_{11}$ Alkenyl 2 bis 8 Kohlenstoffatomen ist.

**14.** Lackzusammensetzung nach Anspruch 12, dadurch gekennzeichnet, dass $Y_1$ Methyl und $Y_2$ ein Octylrest oder durch Hydroxyl, Alkoxy mit 13 oder 15 Kohlenstoffatomen, -COO$Y_8$ und/oder -OCO$Y_{11}$ substituiertes Alkyl mit 1 bis 3 Kohlenstoffatomen ist, worin $Y_8$ ein Decyl- oder Octadecenylrest oder durch Hydroxyl substituiertes und ein Sauerstoffatom unterbrochenes Alkyl mit 7 Kohlenstoffatomen und $Y_{11}$ Propenyl ist.

**15.** Lackzusammensetzung nach Anspruch 1, dadurch gekennzeichnet, dass in den Verbindungen der Formel (3) v und w unabhängig voneinander 1 oder 2 sind, und die Substituenten Z unabhängig voneinander Wasserstoff, Halogen oder Alkoxy mit 1 bis 12 Kohlenstoffatomen sind.

**16.** Lackzusammensetzung nach Anspruch 1, dadurch gekennzeichnet, dass sie zusätzlich mindestens ein gehindertes Amin enthält, insbesondere ein solches, das mindestens einen Rest der Formel

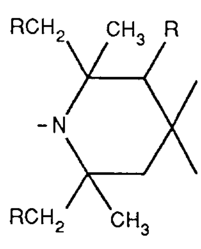

enthält, worin R Wasserstoff oder Methyl ist.

**17.** Verwendung von 0,01 bis 5 Gew.-% einer UV-Absorber-Mischung gemäss Anspruch 1 in Lacken.

18. Verwendung von 0,01 bis 5 Gew.-% einer Mischung aus den Verbindungen der Formeln (1a) und/oder (1b) und den Verbindungen der Formel (2) in Lacken.

19. Verwendung nach Anspruch 17 oder 18, worin die Lacke Ein- oder Zweischichtenlacke sind.

20. Verwendung nach Anspruch 17 oder 18, worin die Lacke strahlenhärtbare Lacke sind.

21. Verwendung nach Anspruch 17 oder 18, dadurch gekennzeichnet, dass die Mischung in Kombination mit mindestens einem sterisch gehinderten Amin, insbesondere einem solchen Amin eingesetzt wird, das mindestens einen Rest der Formel

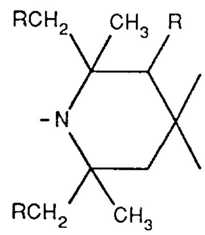

enthält, worin R Wasserstoff oder Methyl ist.

22. Lackfilm, erhältlich durch Aufbringen einer Lackzusammensetzung gemäss Anspruch 1 auf eine Oberfläche und Härtung der aufgebrachten Lackzusammensetzung.

## Claims

1. A coating composition which contains, as the UV absorber, from 0.01 to 5% by weight of a mixture of at least one 2-hydroxyphenylbenzotriazole and at least one 2-hydroxyphenyltriazine or 2-hydroxybenzophenone, and 2-hydroxyphenylbenzotriazole is present in a molar ratio of 3:1 to 1:3 to 2-hydroxyphenyltriazine and/or 2-hydroxyphenylbenzotriazole is present in a molar ratio of 3:1 to 1:3 to 2-hydroxybenzophenone, where the 2-hydroxyphenylbenzotriazole has the formula

(1a) 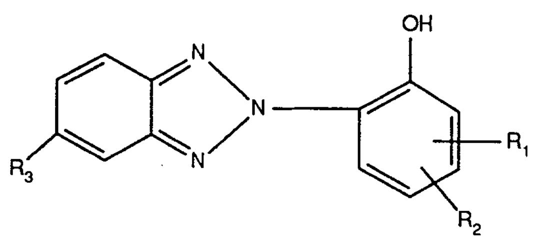 or

(1b) 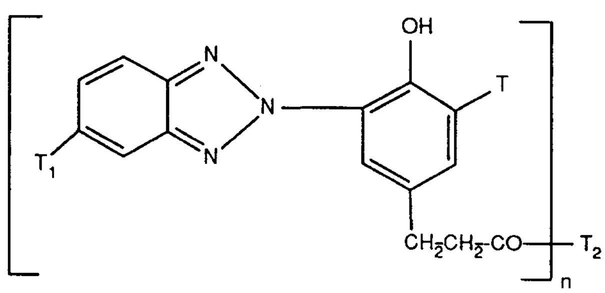 ,

the 2-hydroxyphenyltriazine has the formula

(2) 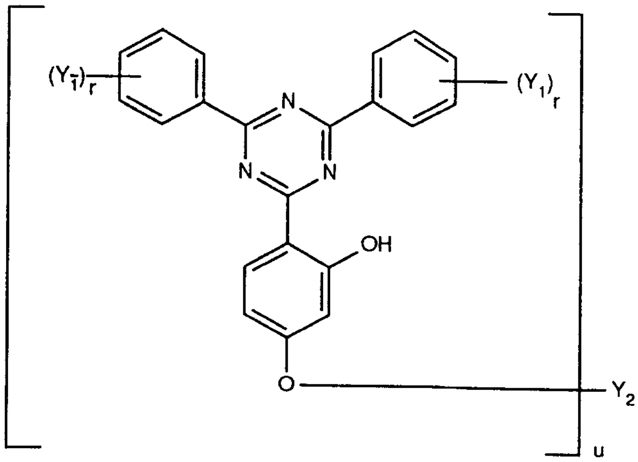

and
the 2-hydroxybenzophenone has the formula

(3) 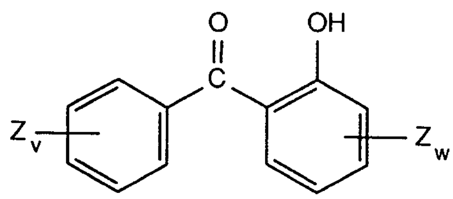

in which, in the compounds of the formula (1a), $R_1$ is hydrogen, alkyl having 1 to 24 carbon atoms or phenylalkyl having 1 to 4 carbon atoms in the alkyl moiety, $R_2$ is hydrogen, halogen, alkyl having 1 to 18 carbon atoms or phenylalkyl having 1 to 4 carbon atoms in the alkyl moiety, and $R_3$ is hydrogen, chlorine or alkyl having 1 to 4 carbon atoms, at least one of the radicals $R_1$ and $R_2$ being other than hydrogen,
in the compounds of the formula (1b) T is hydrogen or alkyl having 1 to 6 carbon atoms, $T_1$ is hydrogen, chlorine or alkyl having 1 to 4 carbon atoms, n is 1 or 2 and, if n is 1, $T_2$ is chlorine or a radical of the formula $-OT_3$ and, if n is 2, $T_2$ is a radical of the formula $-O-T_9-O-$ in which $T_3$ is hydrogen, alkyl which has 1 to 18 carbon atoms and is unsubstituted or substituted by 1 to 3 hydroxyl groups, alkyl which has 3 to 18 carbon atoms, is interrupted once or several times by -O- and is unsubstituted or substituted by hydroxyl, alkenyl which has 2 to 18 carbon atoms and is unsubstituted or substituted by hydroxyl, phenylalkyl having 1 to 4 carbon atoms in the alkyl moiety, or a radical of the formula $-CH_2CH(OH)-T_7$, $T_7$ is hydrogen, alkyl having 1 to 18 carbon atoms or phenyl, $T_9$ is alkylene having 2 to 8 carbon atoms, alkenylene having 4 to 8 carbon atoms, cyclohexylene or alkylene which has 2 to 18 carbon atoms and is interrupted once or several times by -O-,
in the compounds of the formula (2) u is 1 or 2 and r is an integer from 1 to 3, the substituents $Y_1$ independently of one another are hydrogen, hydroxyl, halogenomethyl, alkyl having 1 to 12 carbon atoms, alkoxy having 1 to 18 carbon atoms, or halogen, if u is 1, $Y_2$ is alkyl having 1 to 18 carbon atoms, alkyl which has 1 to 12 carbon atoms and is substituted by hydroxyl, alkoxy having 1 to 18 carbon atoms, halogen, -COOH, $-COOY_8$, $-CONH_2$, $-CONHY_9$, $-CONY_9Y_{10}$, -CN and/or $-OCOY_{11}$, alkyl which has 4 to 20 carbon atoms, is interrupted by one or more oxygen atoms and is unsubstituted or substituted by hydroxyl or alkoxy having 1 to 12 carbon atoms, alkenyl having 3 to 6 carbon atoms, glycidyl, phenylalkyl which has 1 to 5 carbon atoms in the alkyl moiety and is unsubstituted or substituted by hydroxyl, chlorine and/or methyl, $-COY_{12}$ or $-SO_2Y_{13}$, or, if u is 2, $Y_2$ is alkylene having 2 to 16 carbon atoms, alkenylene having 4 to 12 carbon atoms, xylylene, alkylene which has 3 to 20 carbon atoms, is interrupted by one or more -O- atoms and/or is substituted by hydroxyl,
$-CH_2CH(OH)CH_2-O-Y_{15}-OCH_2CH(OH)CH_2$, or $-(CH_2)_m-CO_2-Y_{18}-OCO-(CH_2)_m$, in which m is 1, 2 or 3, $Y_8$ is alkyl having 1 to 18 carbon atoms, alkenyl having 3 to 18 carbon atoms, alkyl which has 3 to 20 carbon atoms, is interrupted by one or more oxygen atoms and/or is substituted by hydroxyl, glycidyl, or phenylalkyl having 1 to 5 carbon atoms in the alkyl moiety, $Y_9$ and $Y_{10}$ independently of one another are alkyl having 1 to 12 carbon atoms, alkoxyalkyl having 3 to 12 carbon atoms, dialkylaminoalkyl

having 4 to 16 carbon atoms or cycloalkyl having 5 to 12 carbon atoms, $Y_{11}$ is alkyl having 1 to 18 carbon atoms, alkenyl having 2 to 18 carbon atoms or phenyl, $Y_{12}$ is alkyl having 1 to 18 carbon atoms, alkenyl having 2 to 18 carbon atoms, phenyl, alkoxy having 1 to 12 carbon atoms, phenoxy, alkylamino having 1 to 12 carbon atoms or phenylamino, $Y_{13}$ is alkyl having 1 to 18 carbon atoms, phenyl or alkylphenyl having 1 to 8 carbon atoms in the alkyl radical, $Y_{15}$ is alkylene having 2 to 10 carbon atoms, phenylene or a group -phenylene-M-phenylene in which M is -O-, -S-, $-SO_2-$, $-CH_2-$ or $-C(CH_3)_2-$, and $Y_{18}$ is alkylene having 2 to 10 carbon atoms or alkylene which has 4 to 20 carbon atoms and is interrupted once or several times by oxygen,
in the compounds of the formula (3) v is an integer from 1 to 3 and w is 1 or 2 and the substituents Z independently of one another are hydrogen, halogen, hydroxyl or alkoxy having 1 to 12 carbon atoms.

2. A coating composition according to claim 1, wherein, in the mixture, the 2-hydroxyphenylbenzotriazole is present in a molar ratio of 2:1 to 1:2 to 2-hydroxyphenyltriazine and/or the 2-hydroxyphenylbenzotriazole is present in a molar ratio of 2:1 to 1:2 to 2-hydroxybenzophenone.

3. A coating composition according to claim 1, wherein the substituent $R_1$ or $R_2$ in the compounds of the formula (1a) is located in the ortho-position or para-position relative to the hydroxyl group.

4. A coating composition according to claim 1, in which, in the compounds of the formula (1a), $R_1$ is hydrogen or alkyl having 1 to 20 carbon atoms, $R_2$ is hydrogen, alkyl having 1 to 18 carbon atoms or phenylalkyl having 1 to 4 carbon atoms in the alkyl moiety and $R_3$ is hydrogen, chlorine or alkyl having 1 to 4 carbon atoms.

5. A coating composition according to claim 4, in which $R_1$ is in the ortho-position relative to the hydroxyl group and is hydrogen or alkyl having 4 to 12 carbon atoms, $R_2$ is in the para-position relative to the hydroxyl group and is alkyl having 1 to 6 carbon atoms or cumyl and $R_3$ is hydrogen or chlorine.

6. A coating composition according to claim 5, in which $R_1$ is alkyl having 8 to 12 carbon atoms, $R_2$ is alkyl having 4 to 6 carbon atoms and $R_3$ is hydrogen.

7. A coating composition according to claim 1, in which, in the compounds of the formula (1b), T is alkyl having 1 to 6 carbon atoms, $T_1$ is hydrogen, chlorine or alkyl having 1 to 4 carbon atoms, n is 1 or 2 and, if n is 1, $T_2$ is the radical of the formula $-OT_3$ and, if n is 2, $T_2$ is a radical of the formula $-O-T_9-O-$ in which $T_3$ is hydrogen, alkyl having 1 to 18 carbon atoms or alkyl which has 3 to 18 carbon atoms and is interrupted once or several times by -O-, and $T_9$ is alkylene having 2 to 8 carbon atoms, alkenylene having 4 to 8 carbon atoms or alkylene which has 2 to 18 carbon atoms and is interrupted once or several times by -O-.

8. A coating composition according to claim 7, in which T is alkyl having 1 to 4 carbon atoms, $T_1$ is hydrogen or chlorine and $T_2$ is one of the radicals of the formula $-OT_3$ or $-O-T_9-O-$ in which $T_3$ is hydrogen, alkyl having 1 to 12 carbon atoms or a radical of the formula $-C_2H_4(OC_2H_4)_{4-8}-H$ and $T_9$ is alkylene having 2 to 8 carbon atoms or a radical of the formula $-C_2H_4(OC_2H_4)_{4-8}-O-$.

9. A coating composition according to claim 8, in which $T_2$ is a radical of the formula $-OT_3$ and $T_3$ is alkyl having 1 to 12 carbon atoms or a radical of the formula $-C_2H_4(OC_2H_4)_{4-8}-H$.

10. A coating composition according to claim 1, in which, in the compounds of the formula (2), the substituents $Y_1$ are hydrogen, alkyl having 1 to 12 carbon atoms or halogen, if u is 1, $Y_2$ is alkyl having 1 to 18 carbon atoms, alkyl which has 1 to 12 carbon atoms and is substituted by hydroxyl, alkoxy having 1 to 18 carbon atoms, $-COOY_8$, $-CONY_9Y_{10}$ and/or $-OCOY_{11}$, glycidyl or phenylalkyl having 1 to 4 carbon atoms in the alkyl moiety, or, if u is 2, $Y_2$ is alkylene having 2 to 16 carbon atoms, alkenylene having 4 to 12 carbon atoms, xylylene or alkylene which has 3 to 20 carbon atoms, is interrupted by one or more -O- atoms and/or is substituted by hydroxyl, the substituents $Y_8$ to $Y_{11}$ being as defined in claim 1.

11. A coating composition according to claim 10, in which the substituents $Y_1$ are hydrogen, alkyl having 1 to 4 carbon atoms or chlorine, if u is 1, $Y_2$ is alkyl which has 1 to 4 carbon atoms and is unsubstituted or substituted by hydroxyl, alkoxy having 1 to 18 carbon atoms, $-COOY_8$, $-CONY_9Y_{10}$ and/or $-OCOY_{11}$,

glycidyl or benzyl, or, if u is 2, $Y_2$ is alkylene having 6 to 12 carbon atoms, butenylene, xylylene or alkylene which has 3 to 20 carbon atoms, is interrupted by one or more -O- atoms and/or is substituted by hydroxyl, $Y_8$ being alkyl having 4 to 12 carbon atoms, alkenylene having 12 to 18 carbon atoms or alkyl which has 6 to 20 carbon atoms, is interrupted by one or more -O- atoms and/or is substituted by hydroxyl, $Y_9$ and $Y_{10}$ independently of one another being alkyl having 4 to 8 carbon atoms and $Y_{11}$ being alkyl having 1 to 8 carbon atoms or alkenyl having 2 or 3 carbon atoms.

**12.** A coating composition according to claim 10, in which u is 1 and r is 2, $Y_1$ is alkyl having 1 to 4 carbon atoms and $Y_2$ is alkyl having 1 to 18 carbon atoms or alkyl which has 1 to 12 carbon atoms and is substituted by hydroxyl, alkoxy having 1 to 18 carbon atoms, $-COOY_8$ and/or $-OCOY_{11}$, $Y_8$ being alkyl having 1 to 18 carbon atoms, alkenyl having 3 to 18 carbon atoms or alkyl which has 3 to 20 carbon atoms, is interrupted by one or more oxygen atoms and/or is substituted by hydroxyl, and $Y_{11}$ being alkenyl having 2 to 18 carbon atoms.

**13.** A coating composition according to claim 12, in which $Y_2$ is alkyl having 1 to 8 carbon atoms or alkyl which has 1 to 4 carbon atoms and is substituted by hydroxyl, alkoxy having 12 to 15 carbon atoms, $-COOY_8$ and/or $-OCOY_{11}$, $Y_8$ being alkyl having 8 to 12 carbon atoms, alkenyl having 12 to 18 carbon atoms or alkyl which has 5 to 10 carbon atoms, is interrupted by an oxygen atom and is substituted by hydroxyl, and $Y_{11}$ being alkenyl having 2 to 8 carbon atoms.

**14.** A coating composition according to claim 12, in which $Y_1$ is methyl and $Y_2$ is an octyl radical or alkyl which has 1 to 3 carbon atoms and is substituted by hydroxyl, alkoxy having 13 or 15 carbon atoms, $-COOY_8$ and/or $-OCOY_{11}$, $Y_8$ being a decyl or octadecenyl radical or alkyl which has 7 carbon atoms and is substituted by hydroxyl and interrupted by an oxygen atom, and $Y_{11}$ being propenyl.

**15.** A coating composition according to claim 1, in which, in the compounds of the formula (3), v and w independently of one another are 1 or 2 and the substituents Z independently of one another are hydrogen, halogen or alkoxy having 1 to 12 carbon atoms.

**16.** A coating composition according to claim 1, which additionally contains at least one sterically hindered amine, in particular an amine of this type containing at least one radical of the formula

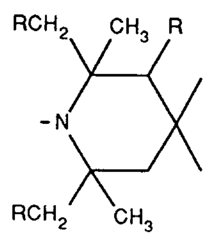

in which R is hydrogen or methyl.

**17.** The use of from 0.01 to 5% by weight of a UV absorber mixture according to claim 1 in coatings.

**18.** The use of from 0.01 to 5% by weight of a mixture of the compounds of the formulae (1a) and/or (1b) and of the compounds of the formula (2) in coatings.

**19.** Use according to claim 17 or 18, wherein the coatings are one-layer or two-layer coatings.

**20.** Use according to claim 17 or 18, wherein the coatings are coatings curable by radiation.

**21.** Use according to claim 17 or 18, wherein the mixture is employed in combination with at least one sterically hindered amine, particularly an amine of this type containing at least one radical of the formula

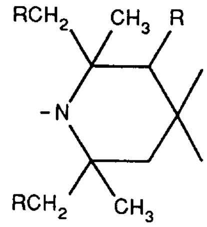

in which R is hydrogen or methyl.

22. A paint film obtainable by applying a coating composition according to claim 1 to a surface and curing the coating composition which has been applied.

**Revendications**

1. Composition de vernis, caractérisée en ce qu'elle contient en tant qu'absorbeurs d'UV de 0,01 à 5 % en poids d' un mélange d' un au moins 2-hydroxyphénylbenzotriazole et d'une au moins 2-hydroxyphényltriazine ou 2-hydroxybenzophénone, le rapport entre le 2-hydroxyphénylbenzotriazole et la 2-hydroxyphényltriazine ou encore du 2-hydroxyphénylbenzotriazole à la 2-hydroxybenzophénone et dans un rapport molaire de 3:1 à 1:3 et le 2-hydroxyphénylbenzotriazole répond à la formule :

(1a) 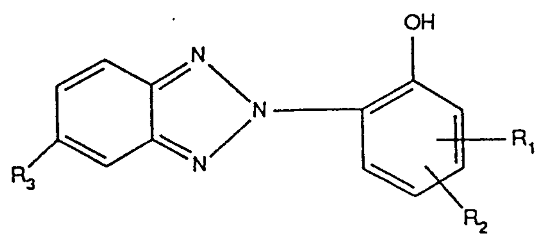

ou

(1b) 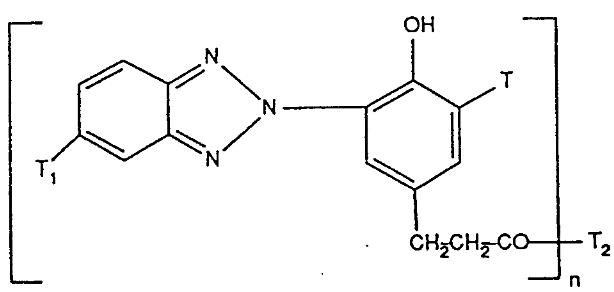

la 2-hydroxyphényltriazine à la formule :

(2) 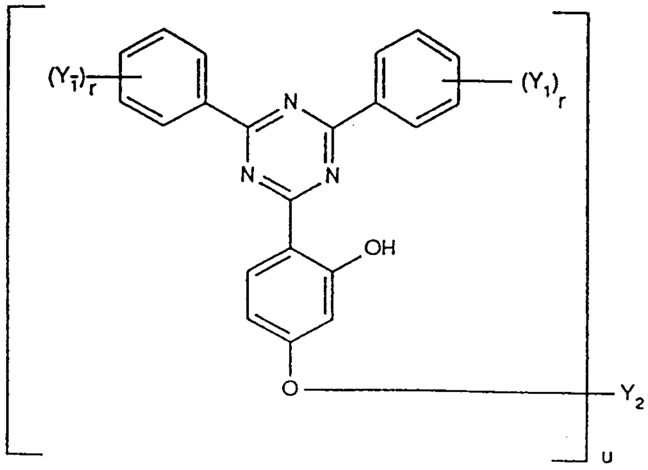

la 2-hydroxybenzophénone à la formule :

(3) 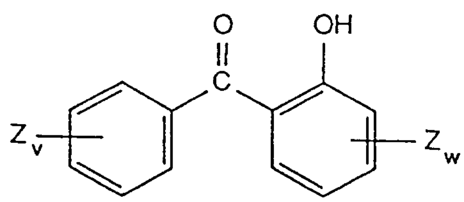

où

dans les composés de formule (1a)

$R_1$ représente hydrogène, alkyle avec 1 à 24 atomes de carbone ou phénylalkyle avec 1 à 4 atomes de carbone dans la partie alkyle,

$R_2$ représente hydrogène, halogène, alkyle avec 1 à 18 atomes de carbone ou phénylalkyle avec 1 à 4 atomes de carbone dans la partie alkyle, et

$R_3$ représente hydrogène, chlore ou alkyle avec 1 à 4 atomes de carbone, l'un au moins des radicaux $R_1$ et $R_2$ étant différents de l'hydrogène,

dans les composés de formule (1b)

T représente hydrogène ou alkyle avec 1 à 6 atomes de carbone,

$T_1$ représente hydrogène, chlore ou alkyle avec 1 à 4 atomes de carbone,

n vaut 1 ou 2 et

$T_2$, lorsque n vaut 1, représente chlore ou un radical de formule $-OT_3$, et lorsque n vaut 2, un radical de formule $-O-T_9-O-$, où

$T_3$ représente hydrogène, alkyle avec 1 à 18 atomes de carbone éventuellement substitué par 1 à 3 groupes hydroxyle, alkyle avec 3 à 18 atomes de carbone interrompu une ou plusieurs fois par -O-, lequel alkyle est éventuellement substitué par hydroxyle, alcényle avec 2 à 18 atomes de carbone éventuellement substitué par hydroxyle, phénylalkyle avec 1 à 4 atomes de carbone dans la partie alkyle ou un radical de formule $-CH_2CH(OH)-T_7$,

$T_7$ représente hydrogène, alkyle avec 1 à 18 atomes de carbone ou phényle,

$T_9$ représente alkylène avec 2 à 8 atomes de carbone, alcénylène avec 4 à 8 atomes de carbone, cyclohexylène ou alkylène avec 2 à 18 atomes de carbone interrompu une ou plusieurs fois par -O-

dans les composés de formule (2)

u vaut 1 ou 2, et

r est un nombre entier de 1 à 3, les substituants

$Y_1$, indépendamment les uns des autres, représentent hydrogène, hydroxyle, halogénométhyle, alkyle avec 1 à 12 atomes de carbone, alcoxy avec 1 à 18 atomes de carbone ou halogène,

$Y_2$ lorsque u vaut 1, représente alkyle avec 1 à 18 atomes de carbone, alkyle avec 1 à 12 atomes de carbone substitué par hydroxyle, par alcoxy avec 1 à 18 atomes de carbone, par halogène, par -COOH, $-COOY_8$, $-CONH_2$, $-CONHY_9$, $-CONY_9Y_{10}$, -CN et/ou $-OCOY_{11}$, alkyle avec 4 à 20 atomes de carbone

interrompu par un ou plusieurs atomes d'oxygène et éventuellement substitué par hydroxyle ou alcoxy avec 1 à 12 atomes de carbone, alcényle avec 3 à 6 atomes de carbone, représente glycidyle, phénylalkyle avec 1 à 5 atomes de carbone dans la partie alkyle non substitué ou substitué par hydroxyle, chlore et/ou méthyle, représente aussi $-COY_{12}$ ou $-SO_2Y_{13}$, ou lorsque u vaut 2, $Y_2$ représente alkylène avec 2 à 16 atomes de carbone, alcénylène avec 4 à 12 atomes de carbone, xylylène, alkylène avec 3 à 20 atomes de carbone interrompu une ou plusieurs fois par -O- et/ou substitué par hydroxyle, $-CH_2CH(OH)CH_2-O-Y_{15}-OCH_2CH(OH)CH_2$ ou $-(CH_2)_m-CO_2-Y_{18}-OCO-(CH_2)_m-$, dans lesquelles

m vaut 1, 2 ou 3,

$Y_8$ représente alkyle avec 1 à 18 atomes de carbone, alcényle avec 3 à 18 atomes de carbone, alkyle avec 3 à 20 atomes de carbone interrompu par un ou plusieurs atomes d'oxygène et/ou substitué par hydroxyle, glycidyle ou phénylalkyle avec 1 à 5 atomes de carbone dans la partie alkyle,

$Y_9$ et $Y_{10}$, indépendamment l'un de l'autre, représentent alkyle avec 1 à 12 atomes de carbone, alcoxyalkyle avec 3 à 12 atomes de carbone, dialkylaminoalkyle avec 4 à 16 atomes de carbone ou cycloalkyle avec 5 à 12 atomes de carbone,

$Y_{11}$ représente alkyle avec 1 à 18 atomes de carbone, alcényle avec 2 à 18 atomes de carbone ou phényle,

$Y_{12}$ représente alkyle avec 1 à 18 atomes de carbone, alcényle avec 2 à 18 atomes de carbone, phényle, alcoxy avec 1 à 12 atomes de carbone, phénoxy, alkylamino avec 1 à 12 atomes de carbone ou phénylamino,

$Y_{13}$ représente alkyle avec 1 à 18 atomes de carbone, phényle, alkylphényle avec 1 à 8 atomes de carbone dans le radical alkyle,

$Y_{15}$ représente alkylène avec 2 à 10 atomes de carbone, phénylène, ou un groupe -phénylène-M-phénylène, où M représente -O-, -S-, $-SO_2-$, $-CH_2-$ ou $-C(CH_3)_2-$ et

$Y_{18}$ représente alkylène avec 2 à 10 atomes de carbone ou alkylène avec 4 à 20 atomes de carbone interrompu une ou plusieurs fois par l'oxygène,

dans les composés de formule (3)

v est un nombre entier de 1 à 3 et w vaut 1 ou 2, et les substituants Z, indépendamment les uns des autres, représentent hydrogène, halogène, hydroxyle ou alcoxy avec 1 à 12 atomes de carbone.

**2.** Composition de vernis selon la revendication 1, caractérisée en ce que dans le mélange le 2-hydroxyphénylbenzotriazole à la 2-hydroxyphényltriazine, respectivement le 2-hydroxyphénylbenzotriazole par rapport à la 2-hydroxybenzophénone sont présents dans un rapport molaire de 2:1 à 1:2.

**3.** Composition de vernis selon la revendication 1, caractérisée en ce dans les composés de formule (1a) que les substituants $R_1$ et $R_2$ sont en position ortho ou para par rapport au groupe hydroxyle.

**4.** Composition de vernis selon la revendication 1, caractérisée en ce que, dans les composés de formule (1a), $R_1$ représente hydrogène, alkyle avec 1 à 20 atomes de carbone, $R_2$ représente hydrogène, alkyle avec 1 à 18 atomes de carbone, phénylalkyle avec 1 à 4 atomes de carbone dans la partie alkyle et $R_3$ hydrogène, chlore ou alkyle avec 1 à 4 atomes de carbone.

**5.** Composition de vernis selon la revendication 4, caractérisée en ce que $R_1$ est en position ortho par rapport au groupe hydroxyle et représente hydrogène, alkyle avec 4 à 12 atomes de carbone, $R_2$ est en position para par rapport au groupe hydroxyle et représente alkyle avec 1 à 6 atomes de carbone ou cumyle et $R_3$ représente hydrogène ou chlore.

**6.** Composition de vernis selon la revendication 5, caractérisée en ce que $R_1$ représente alkyle avec 8 à 12 atomes de carbone, $R_2$ représente alkyle avec 4 à 6 atomes de carbone et $R_3$ l'hydrogène.

**7.** Composition de vernis selon la revendication 1, caractérisée en ce que dans les composés de formule (1b) T représente alkyle avec 1 à 6 atomes de carbone,

$T_1$ représente hydrogène, chlore ou alkyle avec 1 à 4 atomes de carbone,

n vaut 1 ou 2 et

$T_2$, lorsque n vaut 1, représente le radical de formule $-OT_3$ et lorsque n vaut 2, le radical de formule $-O-T_9-O-$dans laquelle

$T_3$ représente hydrogène, alkyle avec 1 à 18 atomes de carbone ou alkyle avec 3 à 18 atomes de carbone interrompu une ou plusieurs fois par -O-, et

$T_9$ représente alkylène avec 2 à 8 atomes de carbone, alcénylène avec 4 à 8 atomes de carbone ou alkylène avec 2 à 18 atomes de carbone une ou plusieurs fois interrompu par -O-.

8. Composition de vernis selon la revendication 7, caractérisée en ce que T représente alkyle avec 1 à 4 atomes de carbone, $T_1$ représente hydrogène ou chlore et $T_2$ un des radicaux de formule -$OT_3$ ou -O-$T_9$-O- où $T_3$ représente hydrogène, alkyle avec 1 à 12 atomes de carbone ou un radical de formule $-C_2H_4(OC_2H_4)_{4-8}-H$ et $T_9$ représente alkylène avec 2 à 8 atomes de carbone ou un radical de formule $-C_2H_4(OC_2H_4)_{4-8}-O-$ ist.

9. Composition de vernis selon la revendication 8, caractérisée en ce que $T_2$ représente un radical de formule -$OT_3$ et $T_3$ représente alkyle avec 1 à 12 atomes de carbone ou un radical de formule $-C_2H_4(OC_2H_4)_{4-8}-H$ ist.

10. Composition de vernis selon la revendication 1, caractérisée en ce que dans les composés de formule (2) les substituants
$Y_1$ représente hydrogène, alkyle avec 1 à 12 atomes de carbone ou halogène,
$Y_2$, lorsque u vaut 1, représente alkyle avec 1 à 18 atomes de carbone, alkyle avec 1 à 12 atomes de carbone substitué par hydroxyle, par alcoxy avec 1 à 18 atomes de carbone, par -$COOY_8$, -$CONY_9Y_{10}$ et/ou -$OCOY_{11}$, représente glycidyle ou phénylalkyle avec 1 à 4 atomes de carbone dans la partie alkyle, ou
$Y_2$, lorsque u vaut 2, représente alkylène avec 2 à 16 atomes de carbone, alcénylène avec 4 à 12 atomes de carbone, xylylène ou alkylène avec 3 à 20 atomes de carbone interrompu par un ou plusieurs -O- et/ou substitué par hydroxyle, les substituants $Y_8$ à $Y_{11}$ ayant les significations données dans la revendication 1.

11. Composition de vernis selon la revendication 10, caractérisée en ce que les substituants $Y_1$ représentent hydrogène, alkyle avec 1 à 4 atomes de carbone ou chlore, $Y_2$, lorsque u vaut 1, représente alkyle avec 1 à 4 atomes de carbone non substitué ou substitué par hydroxyle, par alcoxy avec 1 à 18 atomes de carbone, par -$COOY_8$, -$CONY_9Y_{10}$ et/ou -$OCOY_{11}$, représente glycidyle ou benzyle, ou
$Y_2$, lorsque u vaut 2, représente alkylène avec 6 à 12 atomes de carbone, buténylène, xylylène ou alkylène avec 3 à 20 atomes de carbone interrompu par un ou plusieurs -O- et/ou substitué par hydroxyle,
$Y_8$ représente alors alkyle avec 4 à 12 atomes de carbone, alcényle avec 12 à 18 atomes de carbone ou alkyle avec 6 à 20 atomes de carbone interrompu par un ou plusieurs -O- et/ou substitué par hydroxyle,
$Y_9$ et $Y_{10}$, indépendamment l'un de l'autre, représentent alkyle avec 4 à 8 atomes de carbone, et
$Y_{11}$ représente alkyle avec 1 à 8 atomes de carbone ou alcényle avec 2 à 3 atomes de carbone.

12. Composition de vernis selon la revendication 10, caractérisée en ce que u vaut 1 et r vaut 2,
$Y_1$ représente alkyle avec 1 à 4 atomes de carbone et
$Y_2$ représente alkyle avec 1 à 18 atomes de carbone ou alkyle avec 1 à 12 atomes de carbone substitué par hydroxyle, par alcoxy avec 1 à 18 atomes de carbone, par -$COOY_8$ et/ou -$OCOY_{11}$, où
$Y_8$ représente alkyle avec 1 à 18 atomes de carbone, alcényle avec 3 à 18 atomes de carbone ou alkyle avec 3 à 20 atomes de carbone interrompu par un ou plusieurs atomes d'oxygène et/ou substitué par hydroxyle et
$Y_{11}$ représente alcényle avec 2 à 18 atomes de carbone.

13. Composition de vernis selon la revendication 12, caractérisée en ce que $Y_2$ représente alkyle avec 1 à 8 atomes de carbone ou alkyle avec 1 à 4 atomes de carbone substitué par hydroxyle, par alcoxy avec 12 à 15 atomes de carbone, par -$COOY_8$ et/ou -$OCOY_{11}$, dans lesquelles
$Y_8$ représente alkyle avec 8 à 12 atomes de carbone, alcényle avec 12 à 18 atomes de carbone ou alkyle avec 5 à 10 atomes de carbone interrompu par un atome d'oxygène ou substitué par hydroxyle et
$Y_{11}$ représente alcényle avec 2 à 8 atomes de carbone.

14. Composition de vernis selon la revendication 12, caractérisée en ce que $Y_1$ représente méthyle et $Y_2$ est un radical octyle ou alkyle avec 1 à 3 atomes de carbone substitué par hydroxyle, par alcoxy avec 13 à 15 atomes de carbone, par -$COOY_8$ et/ou -$OCOY_{11}$, où $Y_8$ représente un radical décyle ou

octadécényle ou alkyle avec 7 atomes de carbone substitué par hydroxyle et interrompu par un atome d'oxygène et $Y_{11}$ représente propényle.

**15.** Composition de vernis selon la revendication 1, caractérisée en ce que dans les composés de formule (3), v et w, indépendamment l'un de l'autre, valent 1 ou 2, et les substituants Z, indépendamment l'un de l'autre, sont l'hydrogène, halogène ou alcoxy avec 1 à 12 atomes de carbone.

**16.** Composition de vernis selon la revendication 1, caractérisée en ce que elle contient de plus au moins une amine à encombrement stérique, plus particulièrement une amine qui contient au moins un radical de formule :

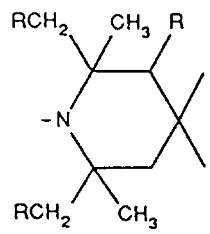

où R représente l'hydrogène ou méthyle.

**17.** Utilisation de 0,01 à 5 % en poids d'un mélange d'absorbeurs d'UV selon la revendication 1 dans les vernis.

**18.** Utilisation de 0,01 à 5 % en poids d'un mélange de composés de formules (1a) et/ou (1b) et de composés de formule (2), dans les vernis.

**19.** Utilisation selon la revendication 17 ou 18, où les vernis sont des vernis à une ou deux couches.

**20.** Utilisation selon la revendication 17 ou 18, où les vernis sont des vernis durcissables par rayonnement.

**21.** Utilisation selon la revendication 17 ou 18, caractérisée en ce que le mélange en combinaison avec au moins une amine à encombrement stérique, plus particulièrement en utilisant une telle amine, qui contient au moins un radical de formule

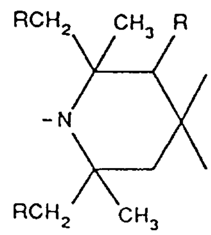

où R représente hydrogène ou méthyle.

**22.** Pellicule de vernis que l'on obtient par application d'une composition de vernis selon la revendication 1 sur une surface et durcissement de la composition de vernis appliqué.